(19) **Europäisches Patentamt / European Patent Office / Office européen des brevets**

(11) **EP 3 443 506 B1**

(12) **FASCICULE DE BREVET EUROPEEN**

(45) Date de publication et mention de la délivrance du brevet:
**21.02.2024   Bulletin 2024/08**

(21) Numéro de dépôt: **17715186.7**

(22) Date de dépôt: **07.04.2017**

(51) Classification Internationale des Brevets (IPC):
*G06N 3/049* $^{(2023.01)}$   *G06N 3/063* $^{(2023.01)}$
*G06N 3/088* $^{(2023.01)}$

(52) Classification Coopérative des Brevets (CPC):
**G06N 3/049; G06N 3/063;** G06N 3/088

(86) Numéro de dépôt international:
**PCT/EP2017/058339**

(87) Numéro de publication internationale:
**WO 2017/178352 (19.10.2017 Gazette 2017/42)**

(54) **NEURONE ARTIFICIEL**

KÜNSTLICHE NERVENZELLE

ARTIFICIAL NEURON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2016   FR 1653175**

(43) Date de publication de la demande:
**20.02.2019   Bulletin 2019/08**

(73) Titulaires:
• **Université de Lille**
  **59800 Lille (FR)**
• **Centre National de la Recherche Scientifique**
  **75794 Paris Cedex 16 (FR)**

(72) Inventeurs:
• **CAPPY, Alain**
  **59242 Genech (FR)**
• **DANNEVILLE, François**
  **59000 Lille (FR)**
• **HOEL, Virginie**
  **59160 Lomme (FR)**
• **LOYEZ, Christophe**
  **62149 Festubert (FR)**

(74) Mandataire: **Cabinet Nony**
  **11 rue Saint-Georges**
  **75009 Paris (FR)**

(56) Documents cités:
• **G. Indiveri: "Neuromorphic electronic circuits as key enablers of autonomous cognitive agents", 2016 Neuro-Inspired Computational Elements (NICE) workshop: March 7-9, 2016, 8 mars 2016 (2016-03-08), XP055351085, Extrait de l'Internet: URL:http://neuroscience.berkeley.edu/wp-content/uploads/2016/05/Giacomo_Indiveri_nice16_sm.pdf [extrait le 2017-02-26]**
• **E. CHICCA ET AL: "Neuromorphic electronic circuits for building autonomous cognitive systems", PROCEEDINGS OF THE IEEE, vol. 102, no. 9, 1 mai 2014 (2014-05-01), pages 1367-1388, XP011556825, DOI: 10.1109/JPROC.2014.2313954**
• **C. ZHAO ET AL: "Spike-time-dependent encoding for neuromorphic processors", ACM JOURNAL ON EMERGING TECHNOLOGIES IN COMPUTING SYSTEMS, vol. 12, no. 3, 21 septembre 2015 (2015-09-21), pages 1-21, XP058073235, DOI: 10.1145/2738040**
• **A. VAN SCHAIK: "Building blocks for electronic spiking neural networks", NEURAL NETWORKS, vol. 14, no. 6-7, 9 juillet 2001 (2001-07-09), pages 617-628, XP004310067, DOI: 10.1016/S0893-6080(01)00067-3**

**EP 3 443 506 B1**

**Description**

La présente invention a pour objet un circuit à faible consommation d'énergie, pouvant reproduire certaines propriétés électriques d'un neurone biologique, et utilisable notamment dans des architectures bioinspirées.

Après près de quarante années de croissance exponentielle, croissance communément appelée « loi de Moore », les performances des systèmes de traitement de l'information ont commencé à saturer en raison d'une puissance dissipée excessive. Le rapprochement entre les progrès récents des neurosciences et de la fabrication de nanodispositifs laisse entrevoir la possibilité de concevoir et fabriquer des architectures radicalement nouvelles avec une efficacité énergétique dépassant de plusieurs ordres de grandeur celle des systèmes actuels. Ces architectures bioinspirées ou neuromorphiques reprennent les principes de fonctionnement actuellement connus du cerveau. Elles sont constituées de neurones et synapses artificiels et elles permettent de réaliser des fonctions telles que des mémoires associatives, des classifieurs ou des approximateurs de fonctions.

Il est d'autant plus important de concevoir des circuits de neurone avec le moins de transistors et consommant le moins d'énergie possible que ces circuits sont destinés à être intégrés dans des réseaux neuronaux VLSI constitués de plusieurs milliers de neurones.

Des approches logicielles d'architectures bioinspirées fondées sur la simulation du cerveau sur un processeur ont été proposées, comme la puce « Synapse » d'IBM.

Des approches matérielles d'architectures bioinspirées ont par ailleurs été proposées, comme le brevet US 6 242 988 B1 utilisant un rebouclage positif ('positive feedback') pour la génération rapide d'impulsions, et la demande EP 2 819 068 A2 mettant en oeuvre un neurone artificiel comprenant une mémoire résistive.

Des circuits plus ou moins complexes, comme celui décrit dans l'article de N.Qiao et al, Frontiers in Neuroscience, vol 9 article 141, 2015, reproduisent dans une technologie CMOS le comportement des neurones, en utilisant le plus souvent le concept de 'log-domain circuits' ou de 'current mirror'.

Un modèle de membrane biologique parmi les plus réputés dans le milieu des neurosciences computationnelles est le modèle de Morris-Lecar. Ce modèle a été déduit à partir de mesures de l'activité électrique d'une fibre musculaire de la bernacle géante et décrit dans un article publié dans Biophysics Journal, vol 35, 1981. Bien que basé sur un système d'équations différentielles non linéaires réduit à deux variables seulement (contrairement à d'autres modèles plus complexes à quatre variables tels que le modèle de Hodgkin-Huxley), le modèle de Morris-Lecar reste proche de la biologie et permet de reproduire différentes dynamiques d'impulsions. La description mathématique de ce modèle est inspirée des observations expérimentales des courants ioniques traversant la membrane de la fibre musculaire.

Il existe plusieurs circuits connus reproduisant les propriétés électriques du modèle de membrane cellulaire de Morris-Lecar comme celui décrit dans l'article de R. Behdad et al., publié dans IEEE transactions on neural networks and learning systems, vol 26, 2015. Dans cet article, les courants ioniques représentés dans le modèle de Morris-Lecar sont celui du calcium et du potassium, et les pertes ohmiques à travers la membrane sont également modélisées.

Afin de modéliser un neurone, il est possible de remplacer dans ce modèle le calcium par le sodium. Là, les différents canaux ioniques s'ouvrent ou se ferment ce qui produit l'activité électrique du neurone. Lorsqu'on applique, par exemple, une excitation externe dépolarisant la membrane du neurone pour l'amener à un potentiel moins négatif, l'ouverture rapide des canaux sodiques (ou calciques) produit un accroissement rapide du potentiel de membrane du neurone, tandis que l'ouverture des canaux potassiques, plus lente, repolarise la membrane du neurone vers la tension de repos négative. Ce mécanisme d'activation/désactivation du neurone produit des impulsions, encore appelées potentiels d'action ('spikes' en anglais).

Le circuit objet de l'article de R. Behdad est décomposé en plusieurs parties, correspondant aux différents courants ioniques, où chacune des parties comprend des composants discrets et actifs, notamment des amplificateurs opérationnels à transconductance, ce qui complexifie le circuit.

Le 8 mars 2016, Indiveri et al. (Neuromorphic electronic circuits as key enablers of autonomous cognitive agents ; atelier "Neuro-Inspired Computational Elements (NICE)" 2016 ; http://neuroscience.berkeley.edu/wp-content/uploads/2016/05/Giacomo_Indiveri_nice16_sm.pdf) décrivirent des circuits de faible puissance émulant des propriétés neuronales et synaptiques, dont un circuit de neurone comprenant deux inverseurs CMOS en cascade, un pont à transistors PMOS et NMOS, ainsi qu'une capacité de membrane.

L'article IEEE de Chicca et al. publié en 2014, intitulé « Neuromorphic electronic circuits for building autonomous cognitive systems » divulgue des architectures de circuits de faible puissance émulant des propriétés neuronales et synaptiques.

L'article ACM de Zhao et al. publié dans Journal on Emerging Technologies in Computing Systems en 2015, intitulé « Spike-time-dependent encoding for neuromorphic processors » décrit un circuit de neurone dont les impulsions sont utilisées pour l'encodage de données.

L'article de Van Schaik publié dans la revue Neural Networks en 2001, intitulé « Building blocks for electronic spiking neural networks », présente un circuit électronique modélisant le procédé de génération d'impulsions dans le neurone biologique. Comme le circuit est de faible surface, plusieurs circuits neuronaux peuvent être implémentés sur une seule puce.

Il n'existe pas à ce jour de dispositifs ou de circuits connus répondant de façon entièrement satisfaisante aux contraintes suivantes :

- une grande simplicité d'implémentation entraînant une faible surface pour une intégration à très grande échelle,
- une grande plage de réglage des performances rapidité-puissance (plusieurs paramètres permettant de définir le couple vitesse-énergie dissipée en fonction de l'application),
- utilisant une technologie industrielle CMOS existante,
- fonctionnant à très basse tension (tension d'alimentation ne dépassant pas +/-100mV) pour une très faible consommation,
- présentant des tensions compatibles avec un interfaçage direct avec le vivant,
- pouvant présenter une efficacité énergétique de valeur inférieure à 1 fJ/impulsion, soit de plusieurs ordres de grandeur inférieure à la valeur de l'efficacité énergétique d'un neurone biologique,
- pouvant être stable ou oscillant sans courant d'excitation,
- pouvant reproduire la génération des impulsions, leur propagation non atténuée et les interconnexions entre neurones par le biais de synapses,
- pouvant fonctionner à une plus grande fréquence que dans le vivant afin de réduire le nombre de dispositifs pour une même puissance de calcul,
- pouvant reproduire fidèlement la forme d'onde en termes d'échelle de temps et d'amplitude du potentiel d'action des neurones biologiques, et
- pouvant reproduire l'évolution typique de la réponse de la fréquence du potentiel d'action d'un neurone biologique en fonction de la valeur du courant d'excitation.

L'invention a pour but de proposer un neurone artificiel pouvant répondre à tout ou partie de ces contraintes. L'invention est définie dans les revendications 1-15.

L'invention permet d'utiliser un nombre réduit de transistors, limitant ainsi la surface occupée par le circuit. Un exemple de circuit complet réalisé en technologie TSMC 65nm selon l'invention n'occupe pas plus que $10\mu m^2$ de surface alors que le soma d'un neurone biologique peut être assimilé à une sphère de 1 à $50\mu m$ de diamètre selon le type de neurone, l'axone pouvant atteindre des millimètres, voire des centimètres, de longueur.

L'invention permet d'utiliser des transistors pouvant fonctionner sous le seuil en technologie standard CMOS, et d'utiliser au moins un inverseur dont les transistors fonctionnent sous le seuil comme étage de gain en tension. Le fonctionnement des transistors sous le seuil correspond à l'existence d'un courant drain-source variant exponentiellement avec la tension de commande de grille dans la région dite d'inversion faible du transistor ('weak-inversion région' ou 'subthreshold région' en anglais) où la tension grille-source est en deçà de la tension de seuil pour laquelle la zone d'inversion apparaît (création d'un canal de conduction entre le drain et la source).

L'invention permet aussi l'utilisation de faibles capacités pour la capacité de membrane notamment, de valeur inférieure à 30fF, notamment inférieure à 10fF, de préférence comprise entre 2fF et 5 fF, alors que les capacités de membrane en biologie sont de l'ordre d'une ou plusieurs centaines de pF.

L'invention permet de réaliser des circuits ayant l'avantage de dissiper une faible énergie par impulsion générée, notamment de valeur inférieure à 3.5fJ/impulsion, de préférence comprise entre 1.1fJ/impulsion et 3.2fJ/impulsion, mieux inférieure à 0.5fJ/impulsion, alors qu'en biologie l'énergie par impulsion générée est généralement comprise entre 1 et 100 pJ. L'énergie dissipée par le neurone artificiel selon l'invention peut être réduite en fonctionnement réel de 1 à 2 ordres de grandeur par rapport aux circuits de neurones artificiels existants.

Grâce à l'invention, il est possible d'avoir un fonctionnement relativement rapide du circuit neuronal, par exemple à une fréquence de l'ordre de 100kHz ou plus, alors que la fréquence du vivant ne dépasse pas les quelques dizaines de Hz.

De préférence, le neurone artificiel comporte une entrée dite d'excitation synaptique externe en courant, la capacité de membrane intégrant ce courant d'entrée. Le point milieu reliant les transistors du pont constitue la sortie du neurone artificiel.

Le neurone artificiel peut comporter une résistance de fuite montée en parallèle avec la capacité de membrane, augmentant les temps de charge/décharge de celle-ci, par analogie avec les courants de fuite membranaire dans le neurone biologique. Cette résistance de fuite peut être constituée d'une résistance ou d'un transistor fonctionnant en dipôle.

Selon un mode de réalisation avantageux, la charge de la capacité de membrane est assurée par le transistor PMOS du pont et sa décharge par le transistor NMOS. Dans ce cas, la capacité de retard connectée au transistor PMOS est inférieure à la capacité de retard connectée au transistor NMOS, mieux est nulle. La capacité de retard connectée au transistor NMOS est de préférence supérieure à la capacité de membrane. Ce mode de réalisation est proche du fonctionnement biologique du neurone où les canaux sodiques/calciques (représentés par analogie par le transistor PMOS du pont) sont plus rapides que les canaux potassiques (représentés par analogie par le transistor NMOS du pont).

La capacité de retard peut être apportée soit par un composant physique que l'on connecte entre la grille du transistor associé et une borne correspondante de la tension d'alimentation, soit par la seule capacité parasite existant entre la grille et la source dudit transistor.

Le neurone artificiel comporte seulement deux inverseurs CMOS en cascade, l'entrée du premier inverseur étant reliée à la capacité de membrane et sa sortie à l'entrée du deuxième inverseur et à la grille de l'un des transistors, la sortie du deuxième inverseur étant reliée à la grille de l'autre transistor.

Le rôle de ces inverseurs, dont chacun est constitué de deux transistors, est la mise en forme et l'amplification en tension des signaux servant à la commande des transistors du pont. On peut parler de rétroaction positive ('positive feedback' en anglais).

Ce neurone artificiel comporte seulement six transistors. De manière alternative, le neurone artificiel comporte seulement trois inverseurs CMOS en cascade, l'entrée du premier inverseur étant reliée à la capacité de membrane et sa sortie à l'entrée du deuxième inverseur, la sortie du deuxième inverseur étant reliée à la grille de l'un des transistors dudit pont, et l'entrée du troisième inverseur CMOS étant reliée à la capacité de membrane et la sortie à la grille de l'autre transistor dudit pont.

L'ajout du troisième inverseur permet d'optimiser de façon indépendante les commandes des transistors du pont, en réglant indépendamment les tensions de seuil des inverseurs.

L'ajustement du gain en tension et des tensions de seuil des inverseurs influe sur le fonctionnement du neurone artificiel.

De préférence, la tension de seuil du neurone qui produit le potentiel d'action est la tension de seuil de l'inverseur alimentant le transistor PMOS du pont. Le nombre d'inverseurs utilisé peut être défini en fonction d'objectifs de rapidité ou de consommation énergétique.

De préférence, la tension de seuil d'au moins l'un des inverseurs CMOS est différente de 0V, notamment comprise entre -50mV et +50mV.

Selon une caractéristique avantageuse de l'invention, le neurone artificiel opère en mode stable et les transistors PMOS et NMOS dudit pont ont des valeurs de conductance différentes, de préférence dans un rapport d'au moins 2, notamment de 2 à 7, par exemple de 5 à 7. Le mode stable correspond par analogie à celui du fonctionnement des neurones du cerveau. En mode stable, pour pouvoir générer des impulsions, le neurone doit recevoir un courant d'excitation externe non nul dont la valeur dépend du degré de stabilité. En effet, plus le ratio des conductances des transistors du pont est important, plus la stabilité est grande, plus l'intensité minimale du courant d'excitation nécessaire pour perturber la stabilité est importante.

Selon une autre caractéristique avantageuse de l'invention, le neurone artificiel opère en mode oscillateur à relaxation et les transistors PMOS et NMOS dudit pont peuvent avoir des valeurs de conductance relativement proches, de préférence dans un rapport de 0.5 à 3, mieux de 0.8 à 1.2, encore mieux de 1 environ.

Le mode oscillateur à relaxation correspond par analogie à celui du fonctionnement de certains neurones de la moelle épinière ou des cellules cardiaques. En mode oscillateur à relaxation, le neurone est instable et génère des impulsions sans courant d'excitation externe. Dans un tel cas, l'entrée d'excitation synaptique externe n'est pas nécessaire.

Selon l'invention, le circuit impulsionnel est alimenté par une alimentation où Vd > Vs. La différence (Vd-Vs) est de préférence fixée de manière à ce que chaque inverseur présente un gain en tension supérieur ou égal à 2, notamment avec une alimentation telle que (Vd-Vs)>=100 mV, de préférence (Vd-Vs)>=120 mV. De préférence, (Vd-Vs) < Vth, Vth étant la tension de seuil de tous les transistors MOS du neurone artificiel. Cette relation entre les tensions permet un fonctionnement sous le seuil de tous les transistors du neurone, pour tout mode de fonctionnement de celui-ci (stable ou oscillateur à relaxation) et pour toute tension drain-source des transistors, c'est-à-dire que ces derniers soient en mode saturation (Vds > Vth) ou non. Généralement, la tension Vs est négative et comprise entre -200 mV et 0 mV, et la tension Vd est positive et comprise entre 0 mV et +200 mV ; pour un fonctionnement basse énergie, la tension négative est de préférence comprise entre -100 mV et -50 mV et la tension positive entre +50 et +100 mV ; la tension négative est notamment comprise entre -100 mV et -70 mV et la tension positive entre +70 et +100 mV pour les applications compatibles avec la biologie. L'amplitude des potentiels d'action est de préférence comprise entre 40 mV et 200 mV. De préférence, on a |Vd-Vs| <= 400 mV.

L'invention n'est pas limitée à une technologie de fabrication particulière du neurone. Selon un mode de réalisation avantageux, les transistors dudit pont sont réalisés en une technologie FD-SOI utilisant la possibilité de commande par le substrat (' backgating' en anglais). Le courant maximal des transistors est alors contrôlé par une tension appliquée à une électrode de substrat appelée 'backgate'. Cette tension de backgate, en modifiant les valeurs de courant maximum des transistors du pont, permet de modifier la fréquence des potentiels d'action et la puissance moyenne dissipée, l'efficacité énergétique (énergie dissipée par impulsion) n'étant pas modifiée de manière sensible.

Le neurone artificiel peut fonctionner en un mode dit rafale ('burst' en anglais), émettant des rafales d'impulsions à intervalles réguliers, par le biais d'un circuit d'excitation intégrant le potentiel de membrane et réinjectant dans la capacité de membrane un courant résultant de cette intégration.

Le mode rafale peut aussi être obtenu sans courant d'excitation externe dans le cas où le neurone est instable.

Le mode rafale du neurone artificiel est particulièrement intéressant pour la stimulation cérébrale profonde, utile dans le traitement de troubles neurologiques comme la maladie de Parkinson.

Le neurone artificiel peut fonctionner en mettant en oeuvre une résonance stochastique. Le phénomène de résonance stochastique est un effet non linéaire dans lequel un signal aléatoire, notamment un bruit, favorise la transmission d'un signal utile. Cet effet peut revêtir diverses formes, selon les types considérés pour le bruit, le signal utile, le système non linéaire de transmission, et la mesure de performance qui est améliorée par addition de bruit.

Dans ce cas, le neurone artificiel reçoit une excitation externe composée de deux courants différents : un courant périodique d'amplitude insuffisante pour générer des potentiels d'action et un courant aléatoire de bruit.

L'invention a encore pour objet, selon un autre de ses aspects, un réseau neuronal comportant une pluralité de neurones artificiels selon l'invention tels que définis ci-dessus, où au moins deux neurones artificiels, dits pré-neurone et post-neurone, sont reliés ensemble par un circuit synaptique.

Le circuit synaptique ayant deux entrées comporte deux transistors reliés en série par leurs drains, l'un au moins desdits transistors étant de type NMOS commandé par un potentiel de grille correspondant à la première entrée du circuit synaptique, la grille du deuxième transistor correspondant à la deuxième entrée du circuit synaptique, la sortie du circuit synaptique correspondant à la source du transistor NMOS étant reliée au potentiel de sortie du post-neurone.

On distingue deux types de synapses : excitatrices et inhibitrices.

Les synapses excitatrices, favorisant la création d'un potentiel d'action par le post-neurone, dépolarisent la membrane du post-neurone et ont un rôle similaire à celui des canaux sodiques. Leur action peut être simulée par un transistor PMOS connecté à la borne positive de la tension d'alimentation.

Les synapses inhibitrices, défavorisant la création d'un potentiel d'action par le post-neurone, hyperpolarisent la membrane du post-neurone et ont un rôle similaire à celui des canaux potassiques. Leur action peut être simulée par un transistor NMOS connecté à la borne négative de la tension d'alimentation.

Le circuit synaptique peut correspondre à une synapse excitatrice où la deuxième entrée du circuit synaptique est reliée à la sortie d'un inverseur ayant pour entrée le potentiel de membrane du pré-neurone, notamment à la grille du transistor PMOS du pont du pré-neurone.

Le circuit synaptique peut également correspondre à une synapse inhibitrice où la deuxième entrée du circuit synaptique peut être reliée à la sortie de deux inverseurs en série dont l'entrée du premier est soumise au potentiel de membrane du pré-neurone.

La deuxième entrée du circuit synaptique dans le cas d'une synapse inhibitrice peut être reliée à la grille du transistor NMOS du pont du pré-neurone.

L'invention a encore pour objet un procédé de traitement d'information, dans lequel on utilise un réseau neuronal tel que défini ci-dessus, pour le traitement d'images, de vidéo ou la reconnaissance faciale, à titre d'exemple.

De préférence, un bruit thermique intrinsèque du neurone artificiel est utilisé pour maintenir une information au sein du réseau neuronal après apprentissage.

De multiples potentiels d'action à très haute fréquence sont appliqués à l'entrée d'un circuit intégrateur dont la sortie est connectée à la première entrée d'une synapse excitatrice telle que définie précédemment.

De préférence, le circuit intégrateur comporte un transistor NMOS dont la source, correspondant à la sortie du circuit intégrateur, est reliée à une capacité, la grille et le drain dudit transistor étant connectés ensemble et correspondant à l'entrée du circuit intégrateur.

Il est également possible de faire fonctionner le neurone artificiel en mode rafale, en le couplant à un deuxième neurone oscillant à basse fréquence par l'intermédiaire de deux synapses, l'une excitatrice du premier vers le deuxième neurone, et l'autre inhibitrice du deuxième vers le premier neurone.

De préférence, les capacités de membrane et de retard du deuxième neurone sont au moins 100 fois plus importantes que celles du premier neurone.

Par exemple, les valeurs de capacité de membrane et de retard du deuxième neurone sont respectivement 0.1pF et 1pF, et celles du premier neurone sont respectivement 1fF et 10fF.

L'invention a encore pour objet, selon un autre de ses aspects, un réseau locomoteur spinal artificiel ('Central Pattern Generator' en anglais), comportant au moins deux neurones artificiels selon l'invention et une synapse inhibitrice telle que définie ci-dessus pour la génération ou régénération d'activité locomotrice chez le vivant ou pour la robotique, à titre d'exemple. Le réseau locomoteur spinal dans le vivant est un réseau de neurones logé dans la moelle épinière.

Selon un mode de réalisation avantageux, le réseau locomoteur spinal artificiel comporte un pré-neurone opérant en mode rafale et un post-neurone opérant en mode oscillant, associés par une synapse inhibitrice.

Selon un autre mode de réalisation avantageux, le réseau locomoteur spinal artificiel comporte deux neurones artificiels fonctionnant tous les deux soit en mode oscillant soit en mode rafale, et mutuellement couplés par deux synapses inhibitrices dont les poids synaptiques sont égaux ou non, de façon à ce que chacun des neurones soit à la fois pré et post-neurone. Le poids synaptique est défini comme étant le rapport entre l'amplitude du potentiel post-synaptique (EPSP pour 'Excitatory Post Synaptic Potential' ou IPSP pour 'Inhibitory Post Synaptic potential' en anglais) et l'amplitude du signal pré synaptique, c'est-à-dire le potentiel d'action du pré-neurone.

Le terme « capacité » peut désigner à la fois un condensateur en tant que composant et sa capacité électrique en tant que grandeur physique, mesurée en Farads (F).

Le « potentiel de membrane » désigne le potentiel à la borne de la capacité de membrane reliée au point milieu du pont de transistors.

L'invention pourra être mieux comprise à la lecture de la description qui va suivre, d'exemples non limitatifs de mise en oeuvre de celle-ci, et à l'examen du dessin annexé, sur lequel :

- la figure 1 représente de façon schématique un neurone artificiel selon un premier mode de réalisation de l'invention, lorsque les inverseurs 5 et 6 sont des inverseurs CMOS, chacun constitué de deux transistors,
- la figure 2 est une vue analogue à la figure 1 d'un neurone artificiel selon un deuxième mode de réalisation de l'invention, lorsque les inverseurs 5 et 6 sont des inverseurs CMOS, chacun constitué de deux transistors,
- la figure 3 représente un circuit de simulation numérique selon le deuxième mode de réalisation,
- les figures 4a et 4b illustrent les formes d'onde des potentiels et courants obtenus par la simulation du circuit de la figure 3,
- la figure 4c illustre les formes d'onde du potentiel de membrane et courants des canaux ioniques obtenus par simulation d'un modèle de neurone biologique,
- la figure 5 représente un circuit de simulation numérique selon un troisième mode de réalisation de l'invention,
- la figure 6 illustre les formes d'onde des potentiels obtenus par la simulation numérique du circuit de la figure 5,
- la figure 7 représente de façon schématique un neurone artificiel selon un quatrième mode de réalisation de l'invention, lorsque les inverseurs 5 et 6 sont des inverseurs CMOS, chacun constitué de deux transistors,
- les figures 8a à 8g représentent des résultats obtenus par la simulation d'un circuit selon la figure 7,
- la figure 9 représente de façon schématique un neurone artificiel selon un cinquième mode de réalisation de l'invention, lorsque les inverseurs 10 à 12 sont des inverseurs CMOS, chacun constitué de deux transistors,
- la figure 10 illustre la caractéristique entrée-sortie d'un inverseur sous le seuil en fonction du rapport des courants de drain maxima de ses transistors N et P,
- les figures 11a et 11b représentent des résultats obtenus par la simulation numérique d'un circuit de neurone selon l'invention, utilisant la possibilité de commande par le substrat,
- la figure 11c illustre un circuit de simulation numérique d'un neurone artificiel mettant en évidence le phénomène de résonance stochastique,
- la figure 11d représente des formes d'onde des courants d'excitation et du potentiel de membrane dans le cas d'une résonance stochastique,
- la figure 12 illustre de façon schématique une partie d'un réseau de neurones utilisant un neurone artificiel selon l'invention,
- la figure 13 représente de façon schématique une interconnexion de deux neurones selon l'invention par l'intermédiaire d'un circuit synaptique,
- la figure 14 illustre un circuit de simulation numérique de l'interconnexion de la figure 13 dans le cas d'une synapse excitatrice,
- la figure 15 représente des résultats obtenus par la simulation numérique du circuit de la figure 14,
- la figure 16 illustre un circuit de simulation numérique analogue à celui de la figure 14 dans le cas d'une synapse inhibitrice,
- la figure 17 représente des résultats obtenus par la simulation numérique du circuit de la figure 16,
- la figure 18 illustre de façon schématique un circuit utilisant le bruit thermique du neurone pour maintenir le poids synaptique d'une synapse excitatrice,
- la figure 19 représente les courbes de poids synaptique obtenues par la simulation du circuit de la figure 18, avec et sans injection de bruit,
- la figure 20 illustre de façon schématique un neurone artificiel fonctionnant en mode rafale par le biais d'un circuit d'excitation adjoint,
- la figure 21 illustre un schéma de simulation numérique Spice pour le circuit de la figure 20,
- les figures 22a et 22b représentent des rafales d'impulsions obtenues en sortie du neurone avec et sans courant d'excitation externe respectivement,
- la figure 22c représente un réseau neuronal artificiel constitué de deux neurones couplés par deux synapses, permettant à l'un des neurones d'émettre des rafales d'impulsions, et
- la figure 22d illustre des résultats obtenus par la simulation numérique du circuit schématisé à la figure 22c.
- la figure 23 illustre de façon schématique un réseau locomoteur spinal artificiel constitué de deux neurones et d'une synapse inhibitrice,
- la figure 24 représente des résultats obtenus par simulation numérique du circuit de la figure 23,
- la figure 25 schématise un réseau locomoteur spinal artificiel constitué de deux neurones et deux synapses inhibitrices,
- les figures 26a et 26b illustrent des résultats obtenus par la simulation numérique du circuit schématisé à la figure 25,

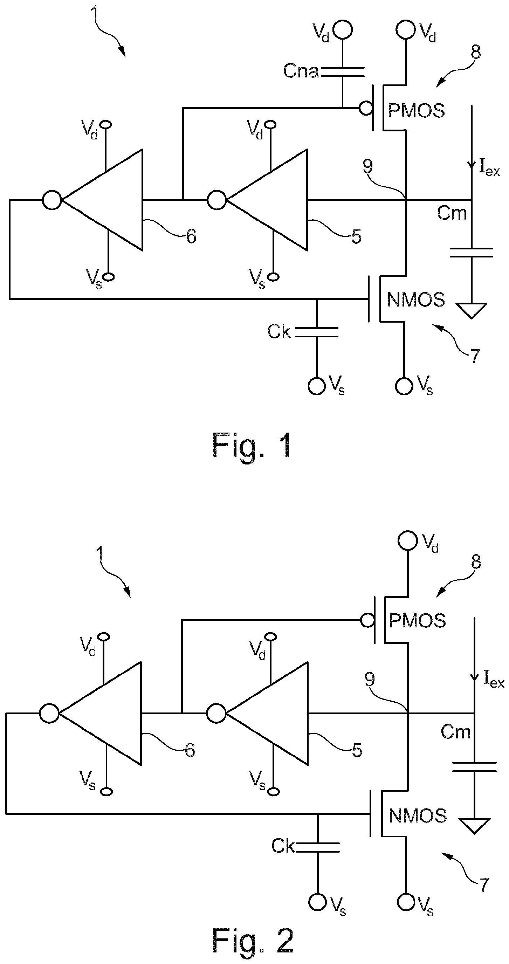

On a représenté à la figure 1 le schéma d'un neurone artificiel 1 selon un premier exemple de réalisation de l'invention, avec deux inverseurs CMOS 5 et 6, chacun constitué de deux transistors, et reliés en cascade, la sortie du premier étant reliée à l'entrée du second. La sortie du premier inverseur 5 est connectée à la grille d'un transistor PMOS 8. La sortie du deuxième inverseur est reliée à la grille d'un transistor NMOS 7. Ce neurone artificiel comporte seulement six transistors.

Sur la figure 1, les transistors 7 et 8 sont électriquement reliés en série et forment un pont entre les tensions d'alimentation Vs et Vd.

Le point milieu 9, définissant la connexion des drains des transistors du pont, est relié à une borne d'une capacité de membrane Cm. L'autre borne de la capacité de membrane Cm est reliée à la masse 0V. Sinon, en variante, cette borne peut être reliée soit à Vs, soit à Vd.

Dans cet exemple, on a Vs =< 0 et Vd >=0.

Une capacité Ck est reliée entre Vs et la grille du transistor NMOS 7. La borne de la capacité Ck reliée à Vs peut sinon être reliée à la masse.

Une capacité Cna est reliée entre Vd et la grille du transistor PMOS 8. La borne de la capacité Cna reliée à Vd peut sinon être reliée à la masse.

$I_{ex}$ désigne le courant d'excitation externe, par exemple issu des synapses (non représentées sur la figure 1).

Lorsque le potentiel de membrane Cm atteint la tension de seuil du premier inverseur 5, un potentiel correspondant est alors transmis après une première inversion par l'inverseur 5 à la grille du transistor PMOS 8, activant ce dernier après un retard défini par la capacité Cna. Ainsi, la capacité de membrane Cm se charge par le canal de conduction ouvert du PMOS. Cette charge correspond au front montant du potentiel d'action en sortie.

Lorsque la tension de seuil du deuxième inverseur 6 est atteinte, un potentiel correspondant est transmis à la grille du transistor NMOS 7, activant ce dernier après un délai défini par la capacité de retard Ck, qui est dans l'exemple considéré plus long que le délai d'activation du PMOS, du fait du choix de Ck > Cna. Ainsi, après avoir eu le temps de se charger, la capacité de membrane Cm commence à se décharger à l'ouverture du canal de conduction du NMOS. Cette décharge correspond au front descendant du potentiel d'action en sortie.

Les tensions d'alimentation Vd et Vs sont ici les équivalents respectifs des potentiels de Nernst du sodium et du potassium par analogie avec la biologie.

Les transistors PMOS 8 et NMOS 7 du pont représentent respectivement les canaux sodiques et potassiques.

Les capacités de retard Cna et Ck représentent les constantes de temps nécessaires à l'ouverture des canaux sodiques et potassiques respectivement, comme le suggère le modèle de Morris-Lecar discuté plus haut.

Généralement, et en conformité avec la biologie, les canaux K sont moins rapides que les canaux Na, ce qui entraîne Ck > Cna. De plus, dans l'exemple considéré, la conductance du transistor NMOS 7 du pont est plus importante que celle du transistor PMOS 8, ce qui induit un potentiel de repos de la membrane proche de Vs, lorsque le courant d'excitation $I_{ex}$ est nul.

La capacité Cna peut être égale à 0, comme illustré à la figure 2.

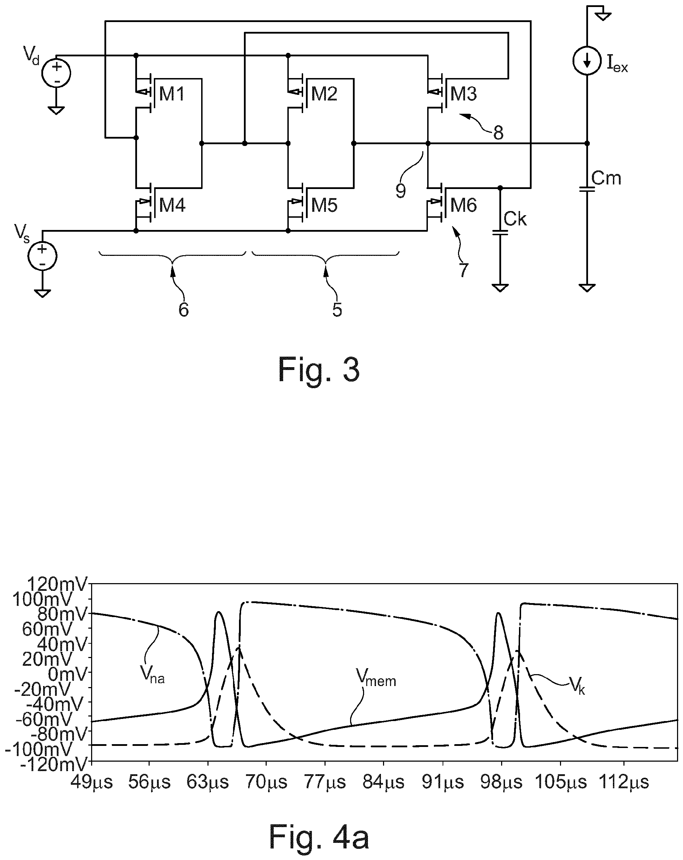

On a représenté à la figure 3 un circuit de simulation numérique réalisé avec le simulateur de circuits analogiques Spice selon l'exemple de la figure 2.

Les transistors 8 et 7 du pont correspondent respectivement aux transistors notés M3 et M6 sur la figure 3, ayant une largeur de grille égale à 0.6μm.

L'inverseur 5 est constitué des deux transistors M2 et M5, ayant une largeur de grille égale à 0.3μm.

L'inverseur 6 est constitué des deux transistors M1 et M4, ayant des largeurs de grille égales à 0.3μm et 0.05μm respectivement.

La longueur de grille des transistors est égale à 22nm. La tension d'alimentation négative est -100mV et celle positive est +100mV.

Les capacités Ck et Cm sont égales à 50fF et 10fF respectivement.

Le courant d'excitation externe est constant, égal à 30pA.

La figure 4a représente les formes d'onde des potentiels de membrane $V_{mem}$ et des tensions $V_{na}$ de grille du transistor PMOS 8 et $V_k$ de grille du transistor NMOS 7.

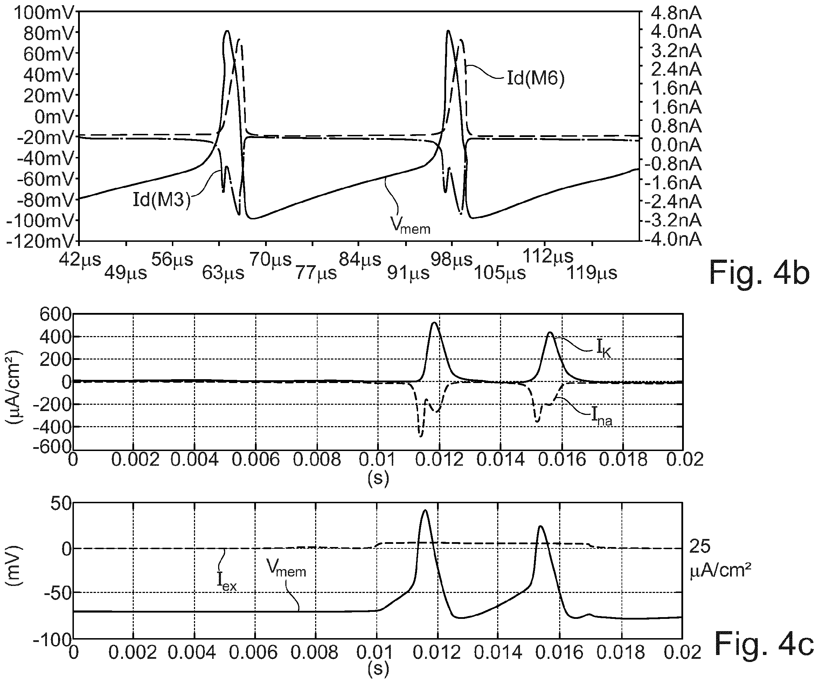

La figure 4b représente, en plus du potentiel de membrane $V_{mem}$, les formes d'onde des courants Id(M3) de drain du transistor 8 et Is(M6) de drain du transistor 7 du circuit de la figure 3.

Ces formes d'onde de potentiel de membrane et de courants ioniques sont similaires à celles rencontrées dans le vivant comme le montre la figure 4c, où sont représentées les formes d'onde obtenues par simulation sur l'outil de calcul numérique Matlab® du modèle de neurone biologique de Wei (Y. Wei et al. The Journal of Neuroscience, August 27, 2014), où Ina et Ik représentent les courbes des courants sodiques et potassiques respectivement.

Un accord qualitatif des formes d'ondes entre les figures 4b et 4c peut être observé.

Dans une variante où Ck < Cna et où le transistor PMOS du pont est plus conducteur que le transistor NMOS, le potentiel au repos de la membrane est proche de Vd et les sorties des deux inverseurs représentés à la figure 1 sont modifiées de telle sorte que la sortie du premier inverseur soit connectée à la grille du transistor NMOS et la sortie du deuxième inverseur soit connectée à la grille du transistor PMOS.

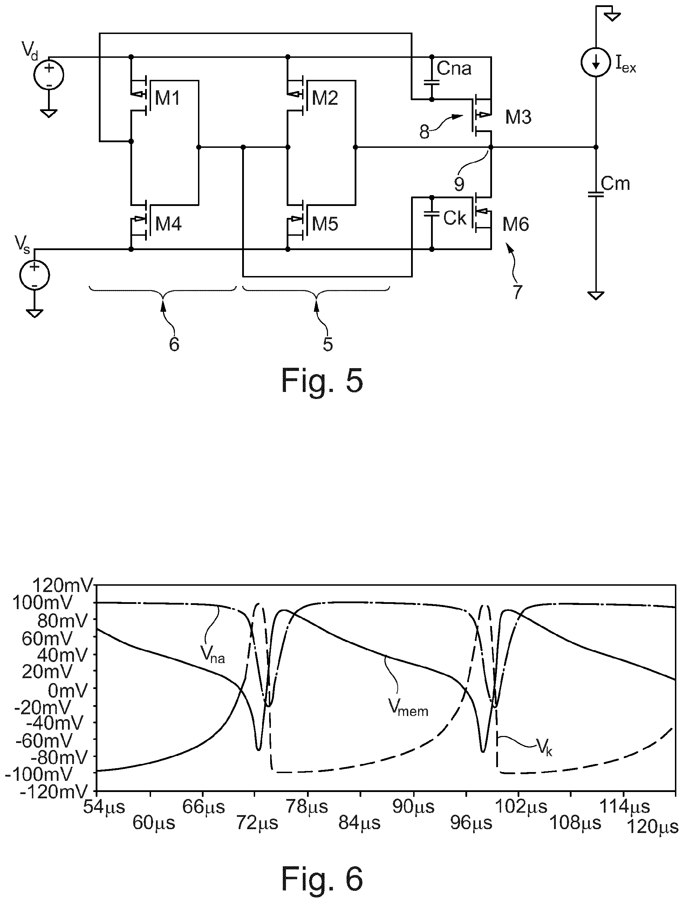

Un circuit de simulation numérique Spice selon ce troisième mode de réalisation de l'invention est illustré à la figure 5.

La figure 6 représente les formes d'onde obtenues, et l'on observe que les impulsions sont inversées par rapport à celles de la figure 4a.

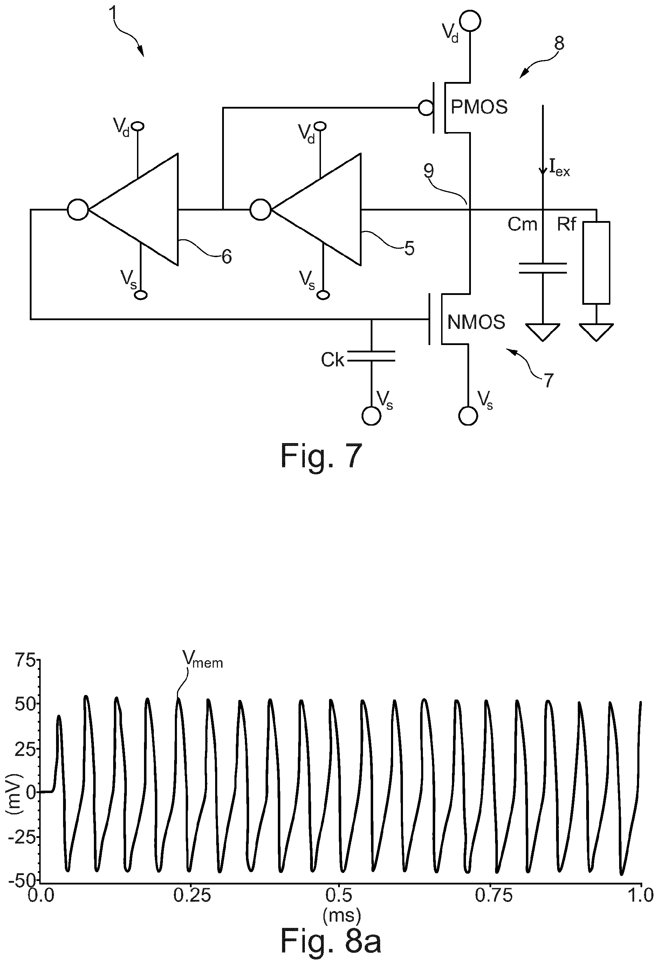

On a représenté schématiquement à la figure 7 un circuit neuronal selon un autre exemple de réalisation de l'invention, lorsque les inverseurs 5 et 6 sont des inverseurs CMOS chacun constitué de deux transistors, et qui diffère donc de celui de la figure 2 par la présence d'une résistance de fuite $R_f$ en parallèle avec la capacité de membrane Cm, par analogie avec les fuites à travers la membrane biologique. Il est encore possible d'éliminer cette résistance de fuite par un dimensionnement adéquat des transistors du pont de façon à rendre le transistor NMOS beaucoup plus conducteur que le transistor PMOS. Ce neurone artificiel comporte seulement six transistors.

La simulation numérique Spice de cet exemple a été réalisée avec la bibliothèque de composants STM 28nm FD-SOI.

Les tensions d'alimentation Vs = -60mV et Vd = 60mV dans cet exemple permettent d'atteindre une amplitude crête à crête de 100mV. Il est possible d'obtenir des impulsions pour des tensions d'alimentation inférieures, mais l'amplitude crête à crête de 100mV n'est alors plus atteinte.

Si les largeurs de grille des transistors du pont sont égales, le transistor PMOS présente un courant de drain moins important que celui du transistor NMOS. De ce fait, la largeur de grille du transistor PMOS est de préférence ajustée de manière à équilibrer ces valeurs de courant, la largeur de grille du transistor NMOS étant par exemple égale à 80nm et celle du PMOS à 450nm.

La figure 8a illustre la forme d'onde du potentiel de membrane dans le cas où Ck = 50 fF et Cm = 5 fF. On observe 20 impulsions d'amplitude crête à crête de 100mV sur une période de 1ms.

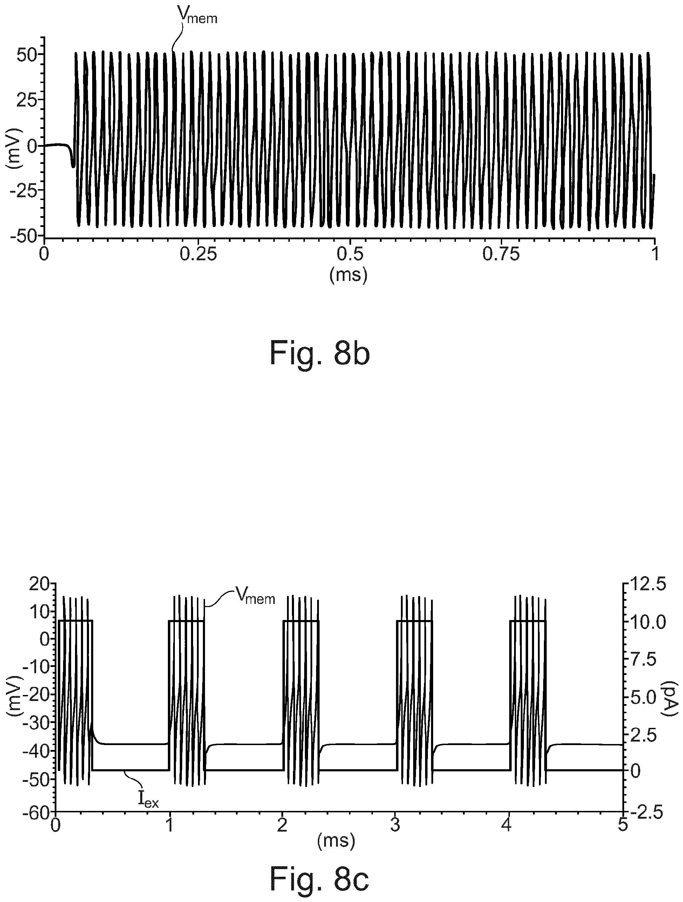

La figure 8b représente la forme d'onde du potentiel de membrane dans le cas où Ck = 10 fF et Cm = 1 fF. On observe une augmentation de la fréquence des impulsions pour la même durée de simulation.

La figure 8c illustre le courant d'excitation en créneaux $I_{ex}$ et le potentiel de membrane $V_{mem}$. On observe que le neurone réagit à l'excitation.

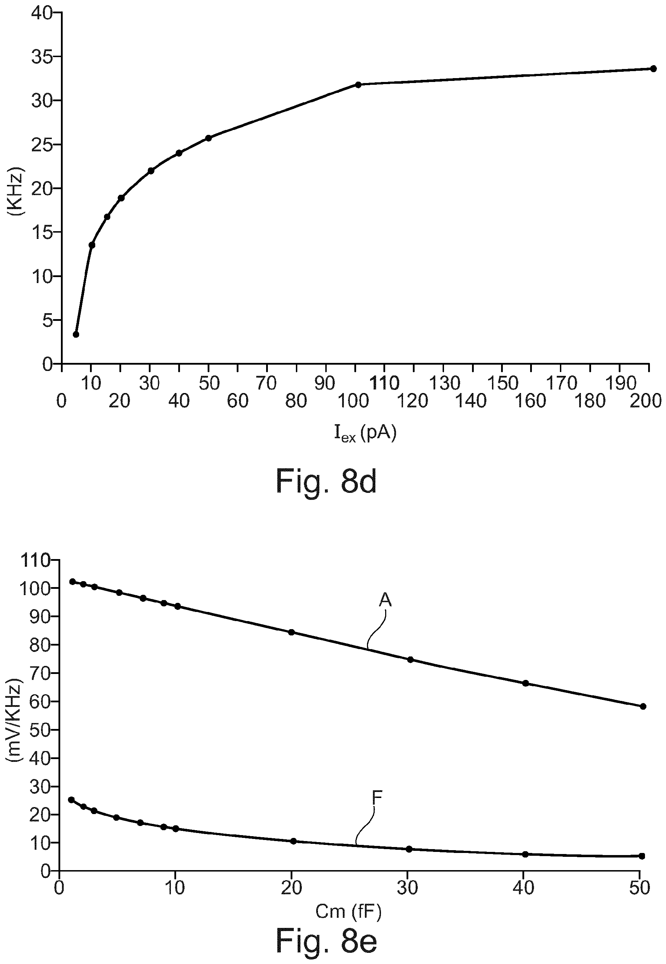

La figure 8d représente la courbe de variation de la fréquence des impulsions en fonction de l'amplitude du courant d'excitation $I_{ex}$.

Ces résultats démontrent que le courant d'excitation $I_{ex}$ et les valeurs des capacités Ck et Cm influent sur la fréquence des impulsions, ce qui prouve la flexibilité du circuit neuronal dans le sens où ces différents paramètres peuvent être utilisés pour l'optimisation des impulsions en sortie.

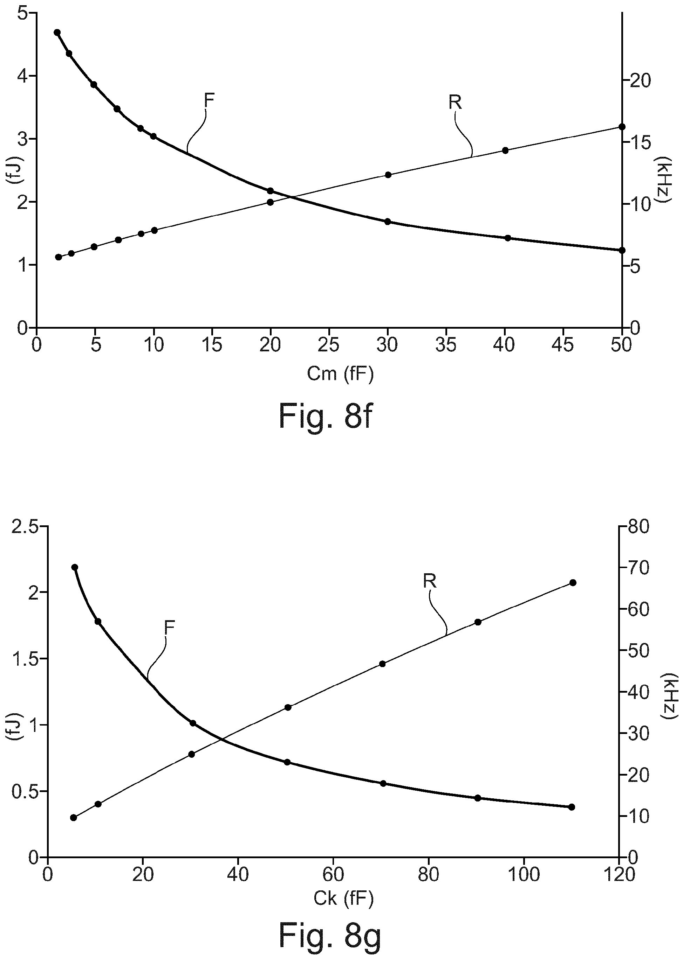

Pour les figures 8e et 8f, la valeur de Ck est fixée à 50 fF et l'on fait varier Cm de 2 fF à 50 fF.

La figure 8e représente la courbe A de variation de l'amplitude crête à crête du potentiel de membrane ainsi que la courbe F de variation de la fréquence des impulsions en fonction de la capacité Cm. On observe une diminution de l'amplitude et de la fréquence des impulsions avec l'augmentation de la valeur de la capacité Cm.

La figure 8f représente, en plus de la courbe F de variation de la fréquence des impulsions, la courbe R d'évolution de l'efficacité énergétique par impulsion.

On observe que l'énergie consommée par impulsion évolue très peu (de 1.1 à 3.2 fJ/impulsion), d'une manière quasi-linéaire, dans la plage [2 fF, 50 fF] de variation de Cm.

La figure 8g illustre la variation de la fréquence des impulsions (courbe F) et de l'efficacité énergétique par impulsion (courbe R) en fonction de la capacité Ck, la capacité Cm étant fixée à 2fF.

Les courbes des figures 8f et 8g ont la même allure. On observe également à la figure 8g que la fréquence des impulsions augmente pour de faibles valeurs de la capacité Ck, et que l'efficacité énergétique semble être directement proportionnelle à Ck, la valeur de Cm étant constante.

On constate qu'il est possible d'obtenir des valeurs d'efficacité énergétique très faibles, pouvant égaler 0.3 fJ par impulsion pour Ck = 5 fF et Cm= 2 fF.

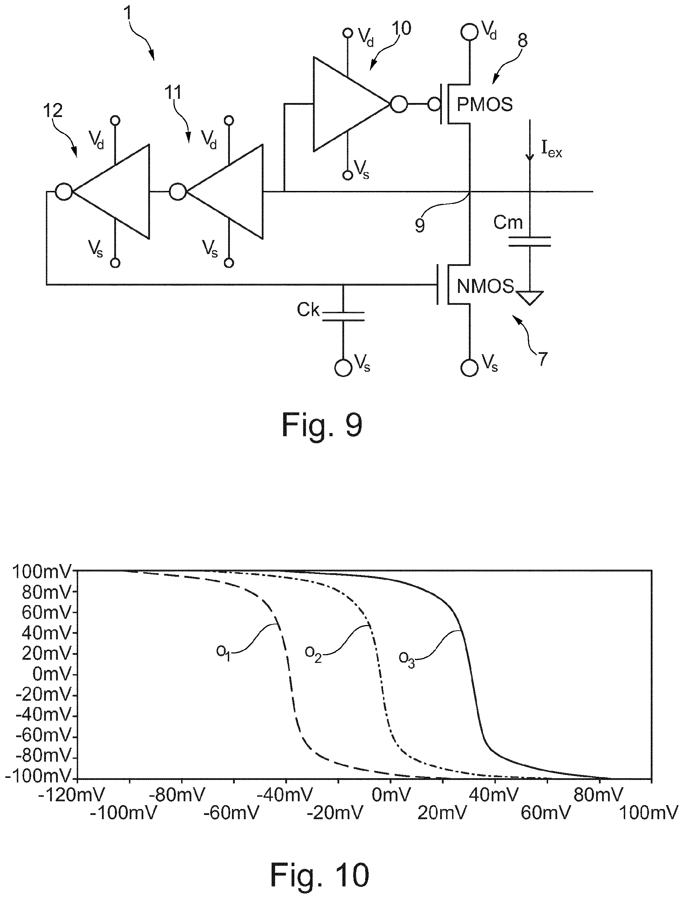

On a représenté schématiquement à la figure 9 un neurone selon un autre exemple de réalisation de l'invention, lorsque les inverseurs 10 à 12 sont des inverseurs CMOS chacun constitué de deux transistors, et qui diffère donc de celui de la figure 2 par l'ajout d'un troisième inverseur 12, le premier inverseur 10 transmettant le potentiel de sortie après inversion à la grille du transistor PMOS 8 du pont et les deux autres inverseurs 11 et 12, reliés en cascade, transmettant le potentiel de sortie à la grille du transistor NMOS 7.

Les entrées des inverseurs 10 et 11 sont reliées au point milieu 9 du pont et à la capacité de membrane, et l'entrée de l'inverseur 12 est reliée à la sortie de l'inverseur 11.

Moyennant quelques approximations, la tension de sortie $V_{out}$ d'un inverseur sous le seuil, alimenté de façon symétrique (Vs = - Vd), est donnée par :

$$V_{out} = -Vd \tanh[V_{in}/(nV_t) + 0.5Ln(I_{n0}/I_{p0})]$$

$V_{in}$ est la tension d'entrée de l'inverseur, $I_{n0}/I_{p0}$ est le rapport des courants maxima des transistors NMOS et PMOS, Vt est le potentiel thermique $k_B T/q$ ($k_B$ étant la constante de Boltzmann, T la température et q charge d'un électron) et n est le coefficient d'idéalité, étant supérieur à 1.

L'expression de $V_{out}$ montre que le gain en tension maximum de l'inverseur est -Vd/(nVt) et que la tension de seuil est donnée par (-nVt/2) Ln($I_{n0}/I_{p0}$).

On peut donc ajuster le gain en tension apporté par les inverseurs avec la tension d'alimentation, et la tension de seuil peut être modifiée de quelques nVt par ajustement des courants maxima des transistors NMOS et PMOS (en modifiant la largeur de grille W des transistors par exemple).

On a représenté à la figure 10 la caractéristique entrée-sortie d'un inverseur sous le seuil en fonction de trois valeurs différentes du rapport des courants maxima des transistors NMOS et PMOS : ($I_{n0}/I_{p0}$) = 6 (courbe $o_1$), ($I_{n0}/I_{p0}$) = 1 (courbe $o_2$) et ($I_{n0}/I_{p0}$) = 1/6 (courbe $o_3$).

Les transistors 7 et 8 du pont peuvent être réalisés en une technologie FD-SOI utilisant la possibilité de commande par une électrode de substrat. Dans ce cas, le courant maximum des transistors est non seulement commandé par leur largeur de grille W, mais aussi par l'électrode de substrat. De ce fait, une action sur la tension de substrat $V_{BB}$ permet de modifier les propriétés temporelles (temps de charge des capacités) et énergétiques du circuit.

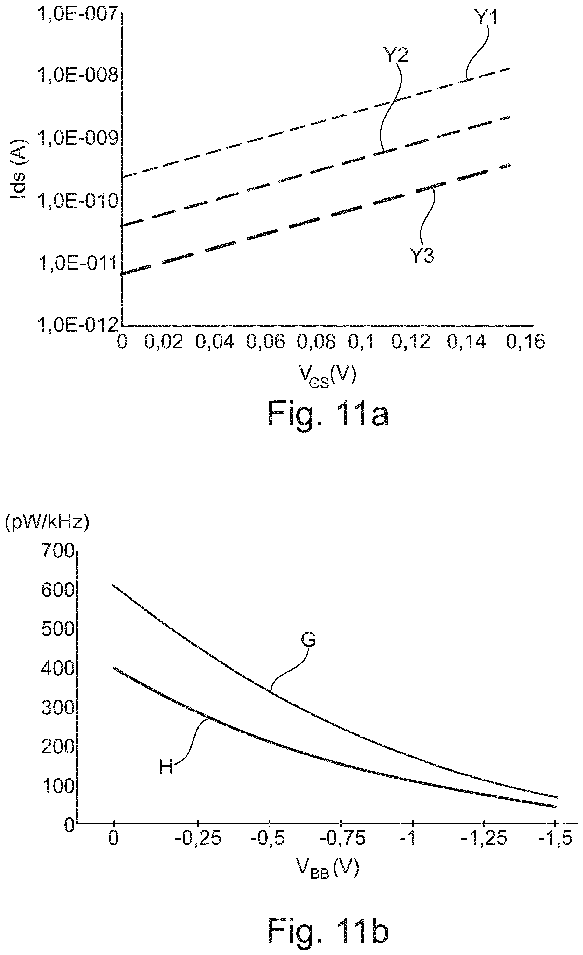

Les figures 11a et 11b représentent pour la technologie 28nm FD-SOI l'influence de la tension de substrat sur le courant maximum du transistor sous le seuil et sur la fréquence des impulsions et la puissance dissipée.

La figure 11a illustre la variation du courant maximum d'un transistor NMOS sous le seuil pour différentes valeurs de tension de substrat : $V_{BB}$ = 0 (courbe Y1), $V_{BB}$ = - 1V (courbe Y2) et $V_{BB}$ = -2V (courbe Y3). Ces variations sont données pour une largeur de grille W = 1.2$\mu$m et une tension drain-source $V_{ds}$ = 0.1V.

La figure 11b représente l'impact de la tension de substrat sur la fréquence des impulsions en kHz à courant d'excitation externe constant (courbe G), et sur la puissance totale dissipée en pW (courbe H).

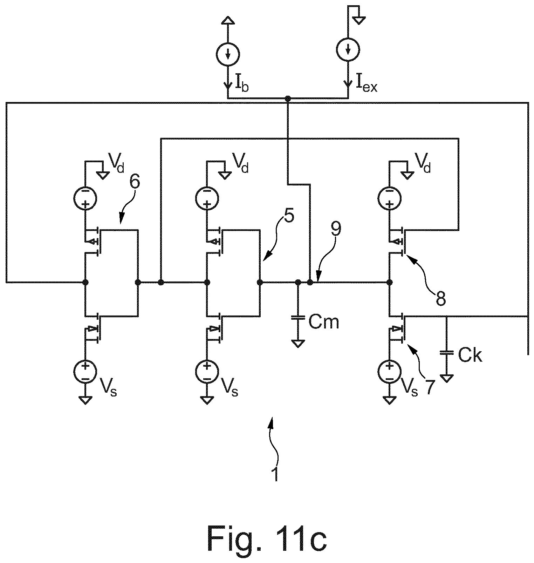

La figure 11c illustre un circuit de simulation numérique d'un neurone artificiel présentant le phénomène de résonance stochastique. Le neurone 1 est excité par deux sources différentes de courant: un courant $I_{ex}$ périodique, sinusoïdal en l'occurrence, d'amplitude insuffisante pour générer des potentiels d'action et un courant de bruit $I_b$ aléatoire.

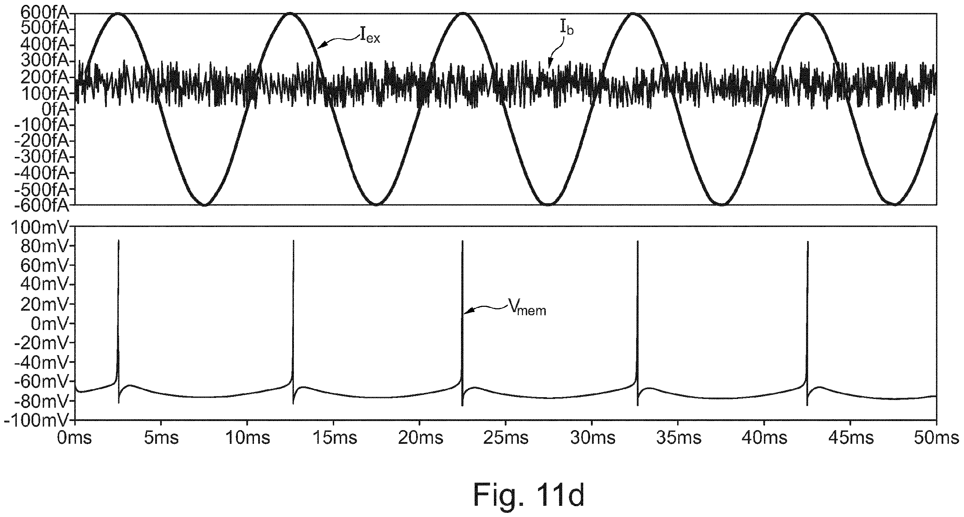

La figure 11d représente les formes d'ondes des deux courants d'excitation et du potentiel de membrane $V_{mem}$. Lorsque le courant d'excitation périodique passe par un maximum, le bruit ajouté est suffisant pour générer un potentiel d'action : c'est le phénomène de résonance stochastique.

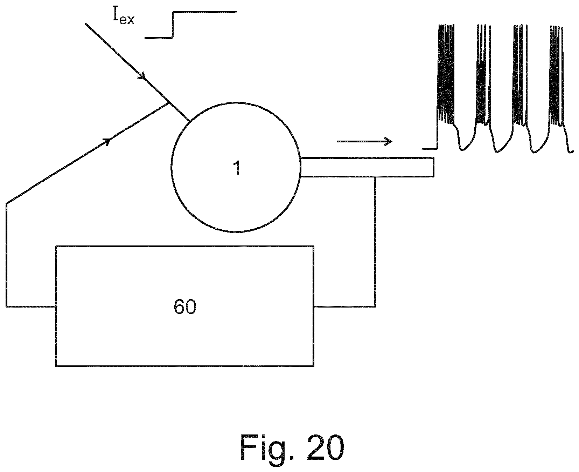

On a illustré à la figure 20 un neurone artificiel fonctionnant en mode rafale où un circuit d'excitation adjoint 60 sert à intégrer le potentiel de membrane et à injecter dans la capacité de membrane un courant d'excitation résultant de cette intégration, faisant ainsi alterner de façon continue un régime d'impulsions très rapides et un régime réfractaire.

Pour obtenir le mode de fonctionnement en rafale d'un neurone artificiel selon le modèle de Morris-Lecar, une possibilité est que la relation entre le courant d'excitation $I_{ex}$ et le potentiel de membrane $V_{mem}$ soit régie par une équation du type :

$$dI_{ex}/dt = \varepsilon(V_0 - V_{mem}(t - T),$$

où $\varepsilon$, $V_0$ et T sont des constantes à définir selon les propriétés recherchées.

Cette équation est celle d'un circuit inductif où le courant d'excitation est proportionnel à l'intégrale du potentiel de membrane.

En effet, lorsque le potentiel de membrane au repos est proche de Vs, la dérivée $dI_{ex}/dt$ du courant d'excitation est positive. Le courant d'excitation croît et $V_{mem}$ atteint le seuil d'oscillation. Les oscillations augmentent la valeur moyenne du potentiel de membrane, entraînant une dérivée de courant $dI_{ex}/dt$ négative et une diminution du courant d'excitation qui passe alors en dessous d'un seuil arrêtant la rafale.

Le principe du mode de fonctionnement en rafale consiste donc à augmenter, respectivement diminuer, le courant d'excitation lorsque le potentiel de membrane est en dessous, respectivement au dessus, d'un certain seuil.

En fonction des constantes $\varepsilon$, $V_0$ et T, le mode rafale peut être obtenu sans courant d'excitation $I_{ex}$ lorsque le circuit est instable.

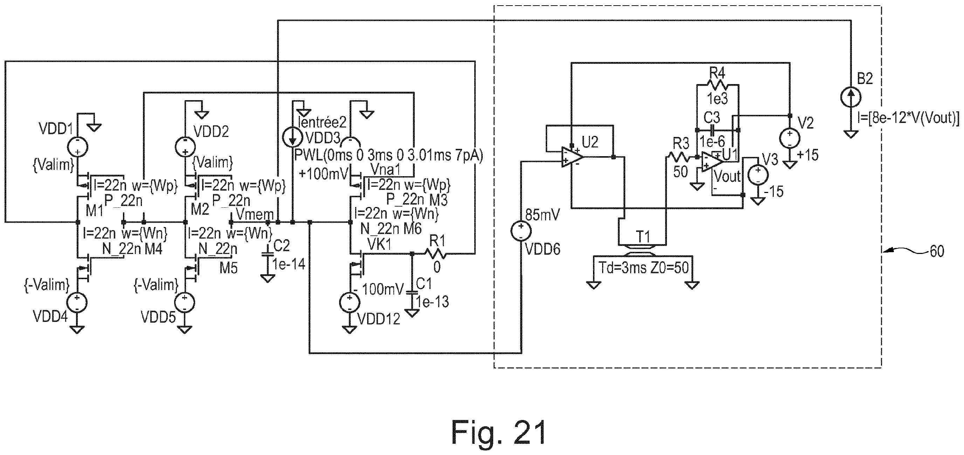

Le circuit d'excitation 60 de la figure 20 peut comporter un amplificateur suiveur, une ligne à retard T et un amplificateur intégrateur tel qu'illustré sur le schéma de simulation Spice de la figure 21. La source B2 sur ce schéma correspond à une transconductance permettant d'obtenir le courant à réinjecter dans la capacité de membrane à partir de la tension Vout en sortie de l'amplificateur intégrateur.

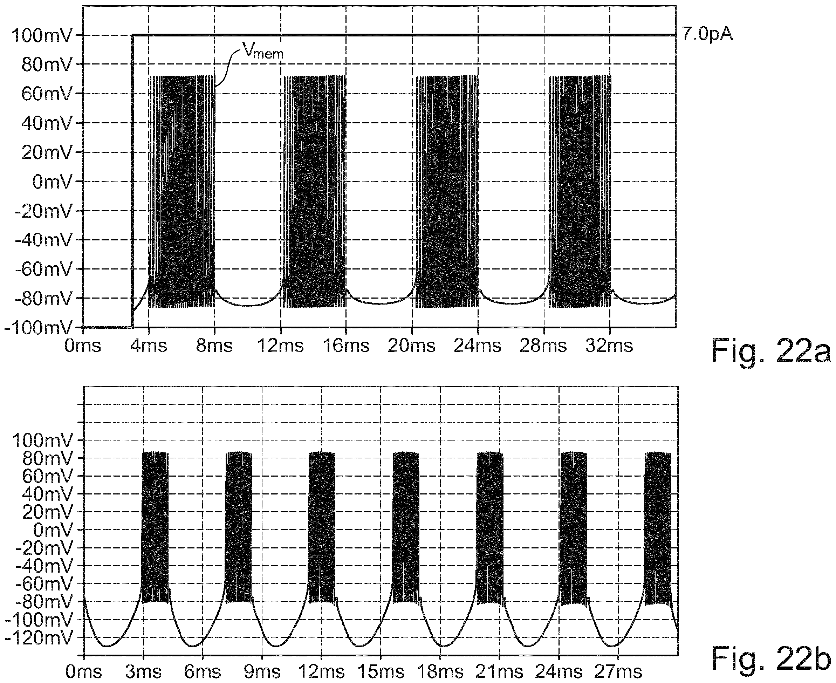

On a représenté à la figure 22a des impulsions en rafale générées avec un échelon de courant d'excitation externe à 7pA. Ces impulsions en rafale obtenues sans courant d'excitation externe sont illustrées à la figure 22b.

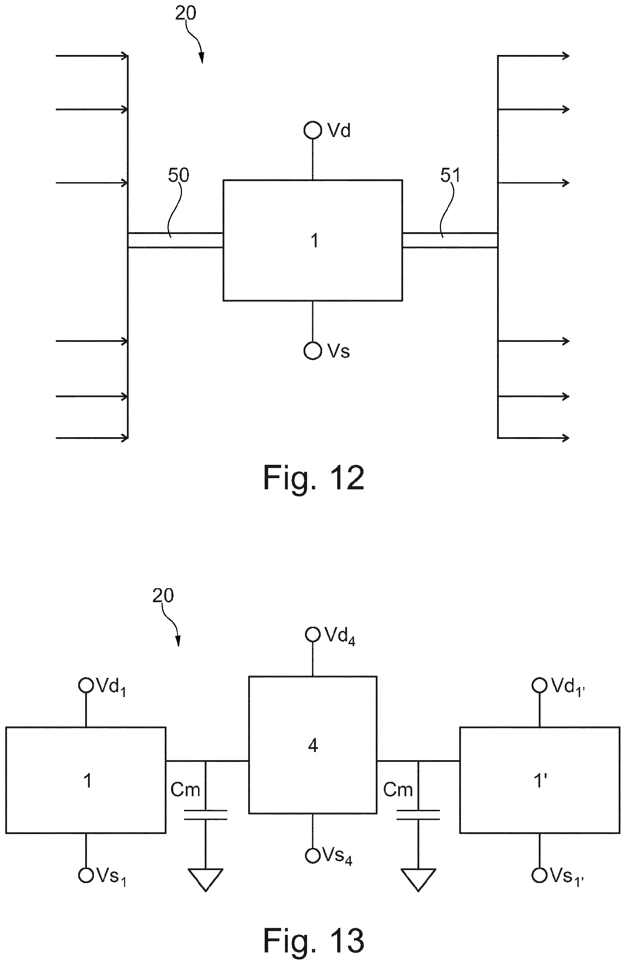

Un exemple d'intégration d'un neurone artificiel selon l'invention dans un système neuromorphique est illustré schématiquement à la figure 12. Dans un système complet de traitement bioinspiré de l'information, dit réseau neuronal 20, le neurone artificiel 1 est connecté à l'entrée par un arbre de dendrites 50 qui produit le courant d'excitation $I_{ex}$. En fonction de ce courant, le neurone produit un potentiel d'action qui est transmis aux synapses de sortie 4 via un axone et un arbre dendritique 51.

L'interconnexion de deux neurones, représentée schématiquement à la figure 13, se fait par l'intermédiaire d'un circuit synaptique 4.

Comme les synapses sont plastiques (leur effet varie en fonction des activités des pré- et post-neurones), leur plasticité est représentée par un poids synaptique (modélisé par le potentiel de grille « weight » sur un transistor NMOS de contrôle). Ce poids synaptique est supposé connu, étant défini par une séquence d'apprentissage ou généré par un circuit annexe (Spike Timing Dépendent Plasticity circuit, par exemple).

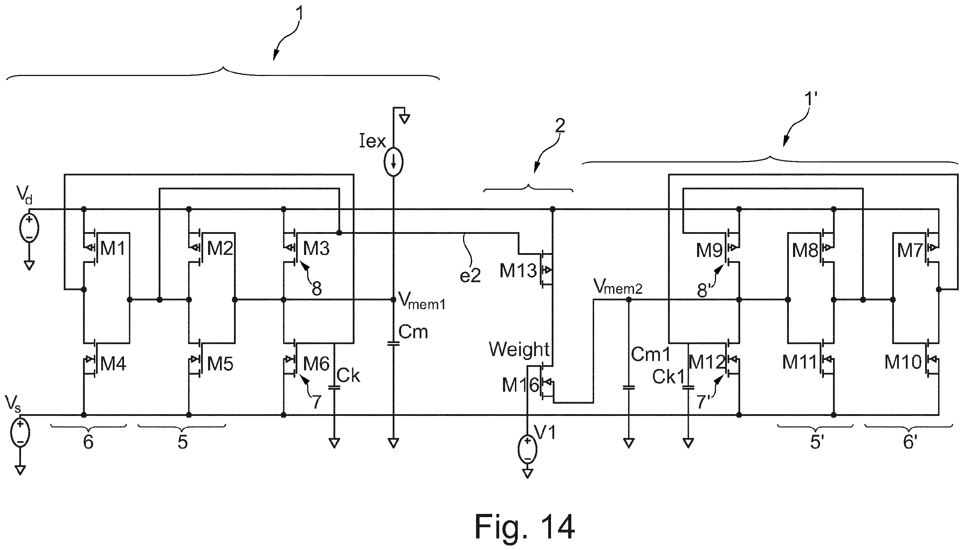

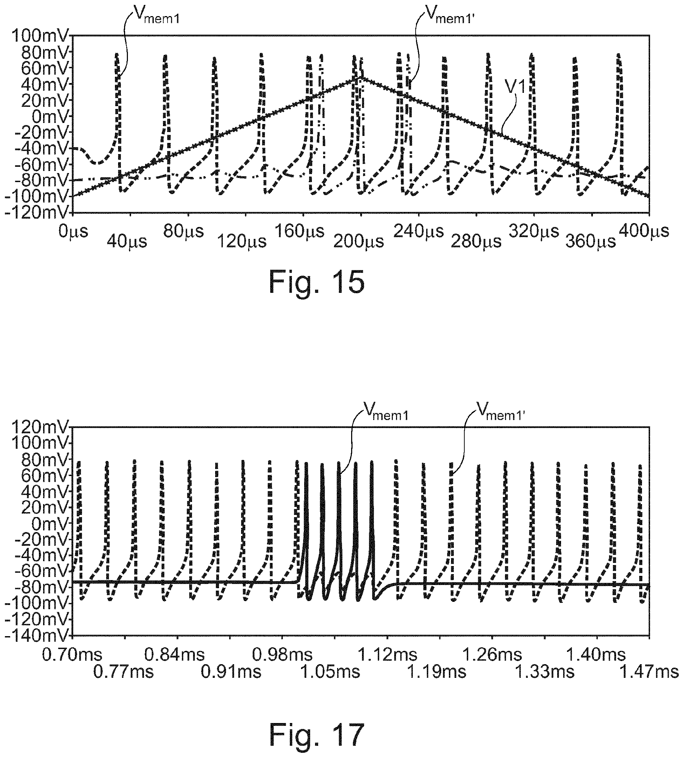

La figure 14 représente un circuit de simulation associant deux neurones 1, 1' par une synapse excitatrice 2. Le pré-neurone 1 est soumis à un courant d'excitation constant $I_{ex}$, produisant des potentiels d'action de façon périodique, illustrés à la figure 15 (courbe $V_{mem1}$). Ce potentiel de membrane $V_{mem1}$ attaque la synapse 2, après une inversion par l'inverseur 5, sur la grille du transistor PMOS M3 reliée à la deuxième entrée e2 de la synapse 2. Le courant délivré au post-neurone 1' est contrôlé par le potentiel $V_1$, variable dans ce cas, appliqué sur la grille « weight » du transistor NMOS M16, et représenté à la figure 15. Pour les poids synaptiques les plus élevés, un potentiel d'action $V_1$' est généré par le post-neurone 1' à chaque impulsion du pré-neurone (courbe $V_{mem1'}$ de la figure 15).

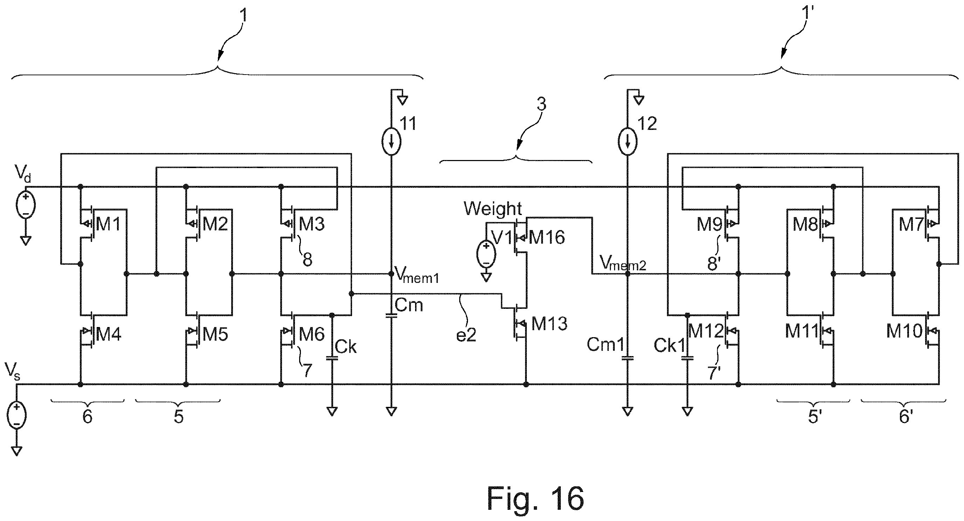

La figure 16 représente le cas d'une synapse inhibitrice 3 reliant les deux neurones 1, 1'. Le post-neurone 1' est excité par un courant constant I2 et il produit des impulsions de façon périodique. Le pré-neurone 1 est excité par un courant constant I1 seulement dans l'intervalle de temps compris entre 1ms et 1.1ms, où il produit 5 potentiels d'action (courbe $V_{mem1}$ de la figure 17). La synapse inhibitrice 3 bloque les potentiels d'action du post-neurone dans cet intervalle de temps (courbe $V_{mem1'}$ de la figure 17).

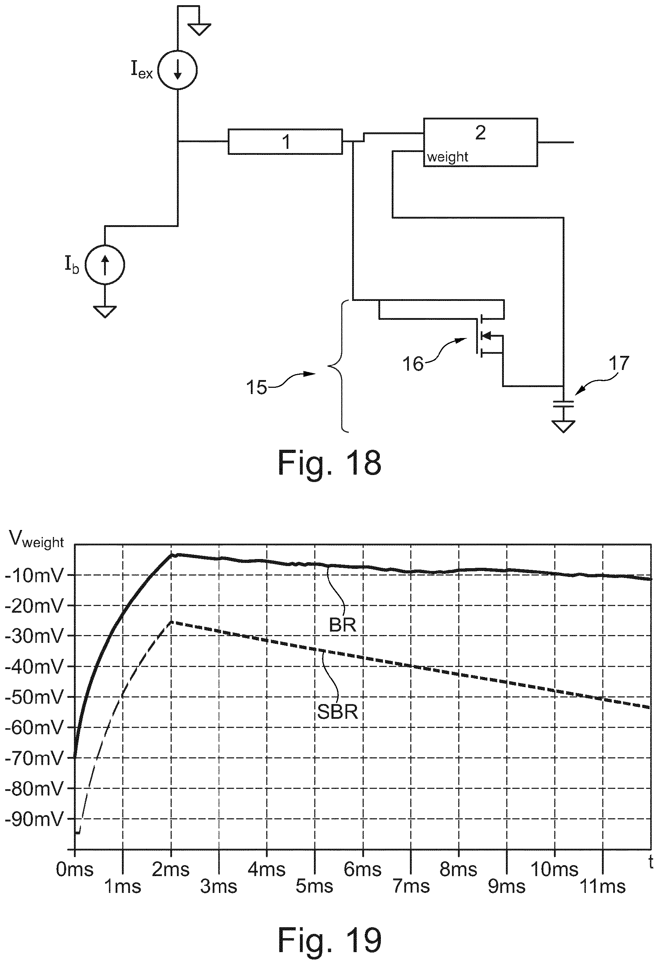

Les figures 18 et 19 illustrent le rôle du bruit thermique intrinsèque du neurone injecté en entrée du circuit dans le maintien du poids synaptique.

Le cas considéré est celui de la HF LTP (High-Frequency Long Term Potentiation) où de multiples potentiels d'action à très haute fréquence sont appliqués à l'entrée d'un intégrateur dont la sortie est connectée à l'entrée du poids d'un circuit synaptique.

La figure 18 représente un circuit intégrateur 15 comportant un transistor NMOS 16 et une capacité 17. La sortie de l'intégrateur est connectée à l'entrée « weight » d'une synapse excitatrice 2. Les impulsions HF sont obtenues par l'application d'un courant constant $I_{ex}$ entretenant l'excitation du pré-neurone 1 pendant les deux premières millisecondes. Ib désigne sur la figure 18 le courant de bruit synaptique.

La figure 19 représente le potentiel du poids synaptique ($V_{weight}$) avec et sans injection de bruit. On observe que le poids synaptique augmente (apprentissage par intégration) jusqu'à l'arrêt des impulsions à 2ms, se traduisant par une décroissance du poids (par relaxation). L'ajout de bruit (courbe BR) permet de réduire le phénomène de relaxation en maintenant la valeur haute du poids plus longtemps. La courbe SBR représente le potentiel du poids synaptique en absence de bruit.

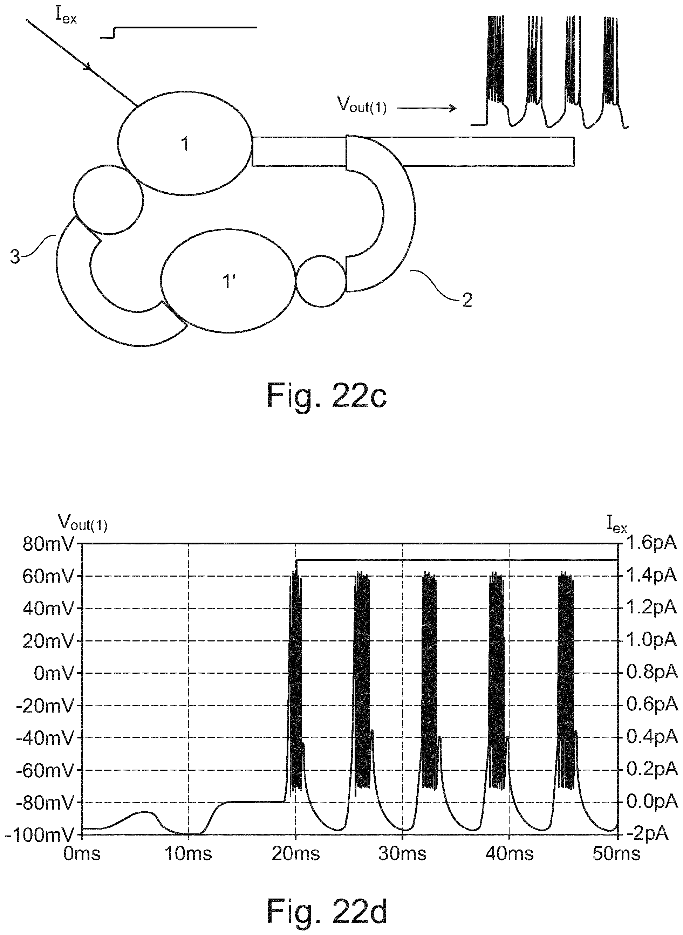

La figure 22c représente de façon schématique un réseau neuronal constitué de deux neurones 1, 1' couplés par l'intermédiaire de deux synapses, l'une excitatrice 2 du premier neurone 1 vers le deuxième 1' et l'autre inhibitrice 3 du deuxième neurone 1' vers le premier 1.

Une autre possibilité d'obtenir le mode rafale est de recourir à ce type de couplage entre des neurones 1, 1', ayant des fréquences d'oscillation différentes. Le premier neurone 1, devant osciller à plus haute fréquence que le deuxième neurone 1', a des valeurs de capacités de membrane $C_{m1}$ et de retard $C_{k1}$ par exemple de deux ordres de grandeur moins importantes que celles $C_{m1'}$ et $C_{k1'}$ du deuxième neurone 1'.

Un échelon de courant appliqué à l'entrée du premier neurone engendre un train d'impulsions. Ces impulsions génèrent un courant synaptique excitateur à l'entrée du deuxième neurone via la synapse excitatrice 2, dépolarisant ainsi le deuxième neurone.

Lorsque le deuxième neurone se dépolarise, il engendre un train d'impulsions générant un courant synaptique inhibiteur à l'entrée du premier neurone via la synapse inhibitrice 3, hyperpolarisant ainsi le premier neurone et arrêtant ses impulsions.

Compte tenu des fréquences d'oscillation différentes des deux neurones, on obtient des oscillations à haute fréquence en sortie du premier neurone, correspondant à des rafales d'impulsions.

La figure 22d illustre ces rafales d'impulsions ($V_{out}(1)$) obtenues suite à un échelon de courant de 1.5pA. Il est à noter que les impulsions sont obtenues pour un courant d'excitation minimum de 0.4pA. La fréquence des impulsions observées augmente avec l'amplitude du courant. Pour obtenir les résultats de la figure 22d, les tensions d'alimentation des neurones et synapses sont de -0.1V et 0.1V. Les largeurs de grille des transistors des inverseurs valent 120nm.

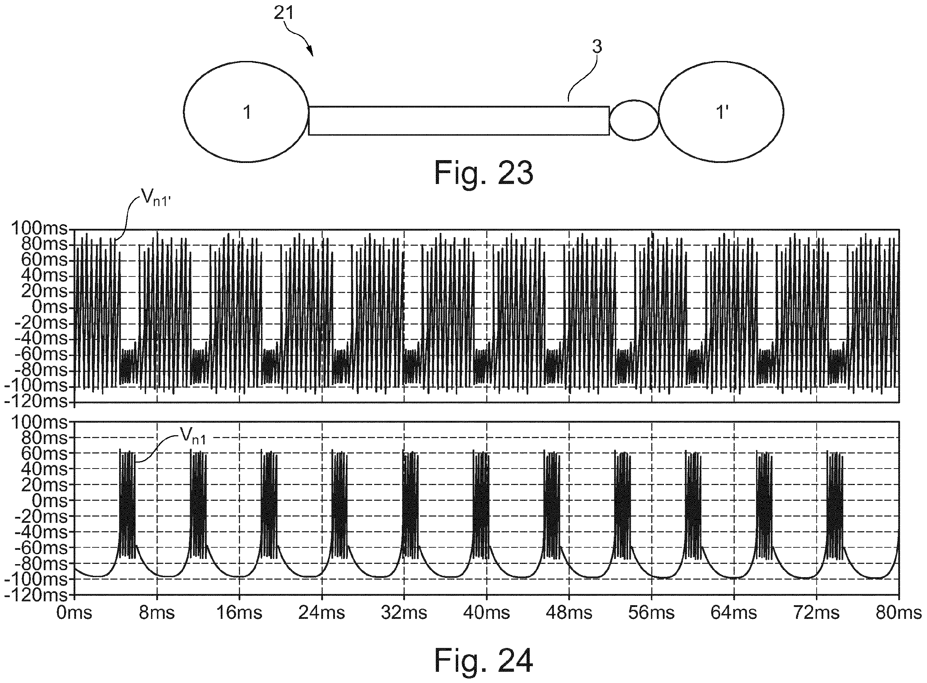

La figure 23 illustre de façon schématique un réseau locomoteur spinal artificiel 21 constitué de deux neurones, un pré-neurone 1 préalablement réglé en mode rafale, connecté à un post-neurone 1' réglé en mode oscillant via une synapse inhibitrice 3.

Le pré-neurone 1 pilote le post-neurone 1'. En effet, lorsqu'il émet des impulsions, le pré-neurone 1 crée un courant synaptique inhibiteur à l'entrée du post-neurone 1' de sorte à empêcher ce dernier d'osciller. Pendant la phase d'hyperpolarisation du pré-neurone 1 (absence d'impulsions), le courant synaptique inhibiteur n'étant pas suffisant, le post-neurone 1' oscille normalement comme s'il était isolé.

La figure 24 représente les formes d'onde en sortie du pré-neurone ($V_{n1}$) et du post-neurone ($V_{n1'}$).

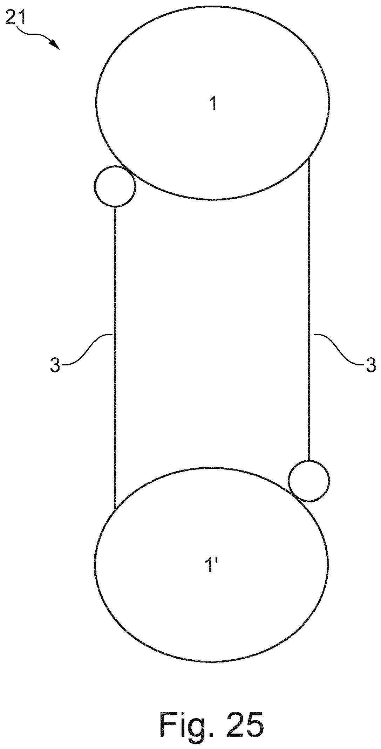

La figure 25 illustre de façon schématique un réseau locomoteur spinal 21 constitué de deux neurones 1, 1' ayant des caractéristiques identiques, couplés entre eux par l'intermédiaire de deux synapses inhibitrices 3 de même poids, de sorte à s'inhiber mutuellement. Deux cas se présentent : soit les deux neurones sont préalablement réglés en mode oscillant, soit ils sont tous les deux préalablement réglés en mode rafale.

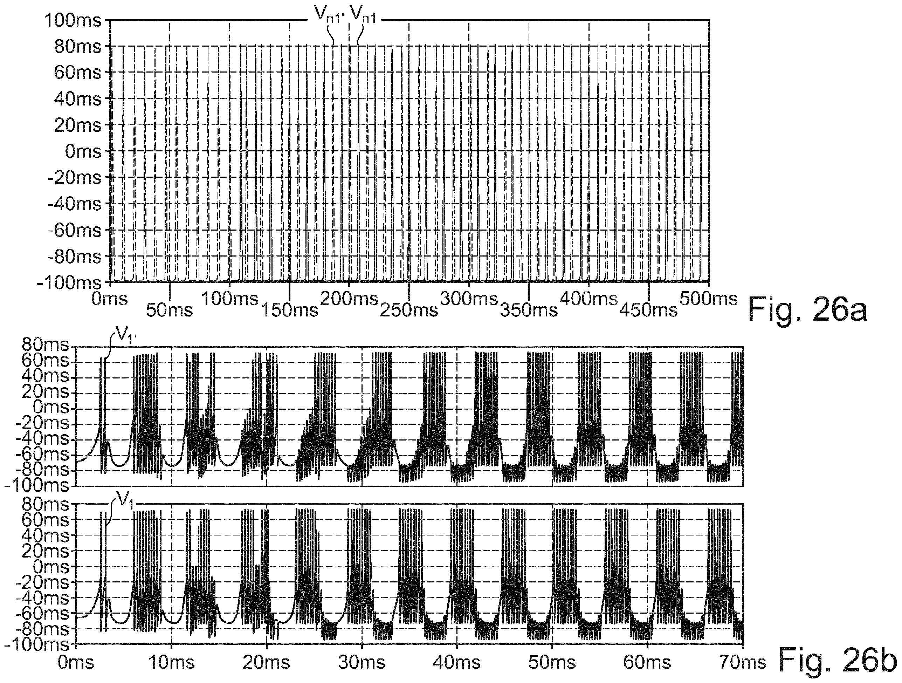

La figure 26a représente les formes d'onde en sortie des deux neurones 1, 1', dans le cas où les deux sont préalablement réglés en mode oscillant. On observe au bout de 150ms que leurs oscillations se produisent de façon alternée.

La figure 26b illustre les formes d'onde en sortie des deux neurones 1, 1', dans le cas où les deux sont préalablement réglés en mode rafale. On observe que la synchronisation conduisant au fonctionnement en mode rafale alterné des deux neurones 1, 1' est obtenue au bout d'une cinquantaine de ms.

La présente invention peut être utilisée dans au moins deux domaines.

Le neurone artificiel selon l'invention sert comme brique de base dans les systèmes neuroinspirés du traitement de l'information, suivant un procédé tel que défini en revendication 14, notamment dans le traitement d'images, de vidéo et dans la reconnaissance faciale. Dans ce cas, les éléments du circuit neuronal seront optimisés pour une grande rapidité et/ou une puissance dissipée très faible.

Par ailleurs, le neurone selon l'invention peut être utilisé dans les applications biomédicales, en tant que neurone biologique artificiel (implant). Dans ce cas, les éléments du circuit sont optimisés pour reproduire fidèlement le potentiel d'action des neurones biologiques.

**Revendications**

1. Neurone artificiel (1 ;1') comportant :

   - une capacité dite de membrane (Cm),
   - une entrée dite d'excitation synaptique externe ($I_{ex}$) en courant, la capacité de membrane (Cm) intégrant ce courant d'entrée,
   - un circuit impulsionnel à contre-réaction, alimenté par une alimentation (Vs, Vd) à la tension négative (Vs) comprise entre -200 mV et 0 mV et à tension positive (Vd) comprise entre 0 mV et +200 mV, consistant en :

      o un pont à transistors PMOS (8) et NMOS (7) en série et reliés en leurs drains par un point milieu (9) à la capacité de membrane (Cm), ce point milieu (9) définissant la sortie du neurone artificiel (1 ;1'),
      o au moins une capacité dite de retard (Cna, Ck) entre la grille et la source de l'un des transistors (7,8) du pont,

   - seulement deux inverseurs (5,6) CMOS en cascade, chacun étant constitué de deux transistors, l'entrée du premier inverseur (5) étant reliée à la capacité de membrane (Cm) et sa sortie à l'entrée du deuxième inverseur (6) et à la grille de l'un des transistors du pont (7;8), la sortie du deuxième inverseur (6) étant reliée à la grille de l'autre transistor du pont (7;8), le neurone artificiel comportant seulement six transistors.

2. Neurone artificiel (1 ;1') comportant :

   - une capacité dite de membrane (Cm),
   - une entrée dite d'excitation synaptique externe ($I_{ex}$) en courant, la capacité de membrane (Cm) intégrant ce courant d'entrée,
   - un circuit impulsionnel à contre-réaction, alimenté par une alimentation (Vs, Vd) à la tension négative (Vs) comprise entre -200 mV et 0 mV et à tension positive (Vd) comprise entre 0 mV et +200 mV, consistant en :

      o un pont à transistors PMOS (8) et NMOS (7) en série et reliés en leurs drains par un point milieu (9) à la capacité de membrane (Cm), ce point milieu (9) définissant la sortie du neurone artificiel (1 ;1'),
      o au moins une capacité dite de retard (Cna, Ck) entre la grille et la source de l'un des transistors (7,8) du pont,

   - seulement trois inverseurs (10,11,12) CMOS dont deux inverseurs (11, 12) sont en cascade, chacun étant constitué de deux transistors, l'entrée du premier inverseur (11) étant reliée à la capacité de membrane (Cm) et sa sortie à l'entrée du deuxième inverseur (12), la sortie du deuxième inverseur (12) étant reliée à la grille de l'un des transistors (7;8) dudit pont, l'entrée du troisième inverseur CMOS (10) étant reliée à la capacité de membrane (Cm) et la sortie du troisième inverseur CMOS (10) étant reliée à la grille de l'autre transistor (7;8) dudit pont.

3. Neurone artificiel (1 ;1') selon la revendication 1 ou 2, la charge de la capacité de membrane (Cm) étant assurée par le transistor PMOS (8) du pont et sa décharge par le transistor NMOS (7).

4. Neurone artificiel (1 ;1') selon l'une quelconque des revendications précédentes, comprenant deux capacités de retard, la capacité de retard (Cna) connectée au transistor PMOS (8) étant inférieure à la capacité de retard (Ck) connectée au transistor NMOS (7), mieux étant nulle, notamment la capacité de retard (Ck) connectée au transistor NMOS (7) étant supérieure à la capacité de membrane (Cm).

5. Neurone artificiel (1 ;1') selon l'une quelconque des revendications précédentes, opérant en mode stable, les transistors PMOS (8) et NMOS (7) dudit pont ayant des valeurs de conductance différentes, de préférence dans un rapport d'au moins 2, notamment de 2 à 7, en particulier de 5 à 7, ou opérant en mode oscillateur à relaxation dans lequel le neurone génère des impulsions sans courant d'excitation externe, les transistors PMOS (8) et NMOS (7) dudit pont ayant des valeurs de conductance, de préférence dans un rapport égal à 1.

6. Neurone artificiel (1 ;1') selon l'une quelconque des revendications précédentes, le circuit impulsionnel étant alimenté par une alimentation avec la tension négative (Vs) comprise entre -100 mV et -50 mV et la tension positive (Vd) comprise entre +50 et +100 mV.

7. Neurone artificiel (1 ;1') selon l'une quelconque des revendications précédentes, la différence (Vd-Vs) étant fixée de manière à ce que le gain en tension de chaque inverseur CMOS soit supérieur ou égal à 2, cette différence étant notamment supérieure ou égale à 100mV, mieux à 120mV et/ou la tension de seuil d'au moins l'un des inverseurs CMOS étant différente de 0V, notamment comprise entre - 50mV et +50mV.

8. Neurone artificiel (1 ;1') selon l'une quelconque des revendications précédentes, les transistors (7) et (8) dudit pont étant réalisés en une technologie FD-SOI utilisant la possibilité de commande par le substrat, permettant de contrôler le courant maximum des transistors (7,8) par une électrode de substrat.

9. Neurone artificiel (1 ; 1') selon l'une quelconque des revendications précédentes, comportant un circuit d'excitation adjoint (60) intégrant le potentiel de membrane, et réinjectant un courant résultant de cette intégration dans la capacité de membrane, lequel circuit d'excitation adjoint (60) ayant pour entrée et sortie le point milieu (9) des transistors du pont et comportant un amplificateur suiveur (U2) apte à prélever le potentiel de membrane, une ligne à retard (T1) apte à introduire un retard dans ce dernier, un amplificateur intégrateur (U1) et une transconductance, l'amplificateur intégrateur (U1) étant configuré pour intégrer le potentiel de membrane, la tension issue de cette intégration étant convertie, par le biais de la transconductance, en courant réinjecté dans la capacité de membrane.

10. Neurone artificiel (1 ; 1') selon l'une quelconque des revendications précédentes, exploitant un phénomène de résonance stochastique par la réception d'une excitation externe de deux courants différents : un courant ($I_{ex}$) périodique d'amplitude insuffisante pour générer des potentiels d'action et un courant aléatoire de bruit ($I_b$).

11. Réseau neuronal (20) comportant un circuit synaptique (4), et au moins deux neurones artificiels (1,1') tels que définis à l'une quelconque des revendications précédentes, dits pré-neurone (1) et post-neurone (1'), reliés ensemble par le circuit synaptique (4), le circuit synaptique (4) ayant deux entrées et comportant deux transistors (M16, M13) reliés en série par leurs drains, l'un au moins desdits transistors étant de type NMOS (M16) commandé par un potentiel de grille (V1) correspondant à la première entrée (weight) du circuit synaptique, la grille du deuxième transistor correspondant à la deuxième entrée (e2) du circuit synaptique, la sortie du circuit synaptique correspondant à la source du transistor NMOS (M16) étant reliée au potentiel de sortie ($V_{mem1'}$) du post-neurone (1').

12. Réseau locomoteur spinal artificiel (21), comportant une synapse inhibitrice (3), et au moins deux neurones artificiels (1,1') selon l'une quelconque des revendications 1 à 10, hormis la revendication 2 et celles qui en dépendent, dits pré-neurone (1) et post-neurone (1'), reliés ensemble par la synapse inhibitrice (3), la synapse inhibitrice (3) ayant deux entrées synaptiques et comportant deux transistors (M16, M13) reliés en série par leurs drains, l'un au moins desdits transistors étant de type NMOS (M16) commandé par un potentiel de grille (V1) correspondant à la première entrée synaptique (weight), la grille du deuxième transistor correspondant à la deuxième entrée synaptique (e2) étant reliée :

- à la sortie des deux inverseurs en série (5, 6) dont l'entrée du premier (5) est soumise au potentiel de membrane du pré-neurone (1), ou
- la grille du transistor NMOS (7) du pont du pré-neurone (1) ; la sortie de la synapse (3) correspondant à la source du transistor NMOS (M16) étant reliée au potentiel de sortie ($V_{mem1'}$) du post-neurone (1').

13. Réseau locomoteur spinal artificiel (21) selon la revendication précédente, comportant :

- un pré-neurone opérant en mode rafale où le pré-neurone est apte à émettre des rafales d'impulsions à intervalles réguliers, et un post-neurone opérant en mode oscillateur à relaxation où le post-neurone est apte à générer des impulsions sans courant d'excitation, couplés par une synapse inhibitrice (3) telle que définie en revendication 12, ou
- deux neurones artificiels (1,1'), fonctionnant tous les deux en mode oscillateur à relaxation où chacun des deux neurones artificiels est apte à générer des impulsions sans courant d'excitation, et mutuellement couplés par deux synapses inhibitrices (3) chacune telle que définie en revendication 12, de façon à ce que chacun des deux neurones artificiels soit à la fois pré et post-neurone, ou
- deux neurones artificiels (1,1') fonctionnant tous les deux en mode rafale où chacun des deux neurones artificiels est apte à émettre des rafales d'impulsions à intervalles réguliers, et mutuellement couplés par deux synapses inhibitrices (3) chacune telle que définie en revendication 12, de façon à ce que chacun des neurones soit à la fois pré et post-neurone.

14. Procédé de traitement d'information, dans lequel on utilise un réseau neuronal (20) tel que défini à la revendication 11, dans lequel de multiples potentiels d'action à très haute fréquence en sortie du pré-neurone (1) sont appliqués à l'entrée d'un circuit intégrateur (15) dont la sortie est connectée à la première entrée (weight) d'une synapse excitatrice (2) réalisée par le circuit synaptique (4), la deuxième entrée de celle-ci étant connectée au pré-neurone (1), en particulier le circuit intégrateur (15) comporte un transistor NMOS (16) dont la source, correspondant à la sortie du circuit intégrateur (15), est reliée à une capacité (17), la grille et le drain dudit transistor (16) étant connectés ensemble et correspondant à l'entrée du circuit intégrateur (15).

15. Procédé de traitement d'information selon la revendication précédente, dans lequel un bruit thermique intrinsèque du pré-neurone (1) est injecté à l'entrée de ce dernier.

## Patentansprüche

1. Künstliches Neuron (1; 1'), das Folgendes umfasst:

- eine sogenannte Membrankapazität (Cm),
- einen sogenannten Eingang für eine externe Synapsenerregung ($I_{ex}$) mit Strom, wobei die Membrankapazität (Cm) diesen Eingangsstrom integriert,
- eine Rückkopplungs-Impulsschaltung, die durch eine Versorgung (Vs, Vd) mit der negativen Spannung (Vs) zwischen -200 mV und 0 mV und mit einer positiven Spannung (Vd) zwischen 0 mV und +200 mV versorgt wird, bestehend aus:

○ einer Brücke aus einem PMOS- (8) und einem NMOS-Transistor (7), die in Reihe geschaltet und an ihren Drains über einen Mittelpunkt (9) mit der Membrankapazität (Cm) verbunden sind, wobei dieser Mittelpunkt (9) den Ausgang des künstlichen Neurons (1; 1') definiert,
○ mindestens eine sogenannte Verzögerungskapazität (Cna, Ck) zwischen dem Gate und der Source von einem der Transistoren (7, 8) der Brücke,

- nur zwei in Kaskade geschaltete CMOS-Inverter (5, 6), wobei jeder aus zwei Transistoren besteht, wobei der Eingang des ersten Inverters (5) mit der Membrankapazität (Cm) und sein Ausgang mit dem Eingang des zweiten Inverters (6) und mit dem Gate von einem der Transistoren der Brücke (7; 8) verbunden ist, wobei der Ausgang des zweiten Inverters (6) mit dem Gate des anderen Transistors der Brücke (7; 8) verbunden ist, wobei das künstliche Neuron nur sechs Transistoren umfasst.

2. Künstliches Neuron (1; 1'), das Folgendes umfasst:

- eine sogenannte Membrankapazität (Cm),
- einen sogenannten Eingang für eine externe Synapsenerregung ($I_{ex}$) mit Strom, wobei die Membrankapazität (Cm) diesen Eingangsstrom integriert,
- eine Rückkopplungs-Impulsschaltung, die durch eine Versorgung (Vs, Vd) mit der negativen Spannung (Vs) zwischen -200 mV und 0 mV und mit einer positiven Spannung (Vd) zwischen 0 mV und +200 mV versorgt wird, bestehend aus:

○ einer Brücke aus einem PMOS- (8) und einem NMOS-Transistor (7), die in Reihe geschaltet und an ihren Drains über einen Mittelpunkt (9) mit der Membrankapazität (Cm) verbunden sind, wobei dieser Mittelpunkt (9) den Ausgang des künstlichen Neurons (1; 1') definiert,
○ mindestens eine sogenannte Verzögerungskapazität (Cna, Ck) zwischen dem Gate und der Source von einem der Transistoren (7, 8) der Brücke,

- nur drei CMOS-Inverter (10, 11, 12), von denen zwei Inverter (11, 12) in Kaskade geschaltet sind, wobei jeder aus zwei Transistoren besteht, wobei der Eingang des ersten Inverters (11) mit der Membrankapazität (Cm) und sein Ausgang mit dem Eingang des zweiten Inverters (12) verbunden ist, wobei der Ausgang des zweiten Inverters (12) mit dem Gate von einem der Transistoren (7; 8) der Brücke verbunden ist, wobei der Eingang des dritten CMOS-Inverters (10) mit der Membrankapazität (Cm) verbunden ist und der Ausgang des dritten CMOS-Inverters (10) mit dem Gate des anderen Transistors (7; 8) der Brücke verbunden ist.

3. Künstliches Neuron (1; 1') nach Anspruch 1 oder 2, wobei das Laden der Membrankapazität (Cm) durch den PMOS-Transistor (8) der Brücke und ihr Entladen durch den NMOS-Transistor (7) sichergestellt wird.

4. Künstliches Neuron (1; 1') nach einem beliebigen der vorhergehenden Ansprüche, das zwei Verzögerungskapazitäten beinhaltet, wobei die Verzögerungskapazität (Cna), die mit dem PMOS-Transistor (8) verbunden ist, kleiner ist als die Verzögerungskapazität (Ck), die mit dem NMOS-Transistor (7) verbunden ist, vorzugsweise Null ist, wobei insbesondere die mit dem NMOS-Transistor (7) verbundene Verzögerungskapazität (Ck) größer ist als die Membrankapazität (Cm).

5. Künstliches Neuron (1; 1') nach einem beliebigen der vorhergehenden Ansprüche, das in einem stabilen Modus arbeitet, wobei der PMOS- (8) und der NMOS-Transistor (7) der Brücke unterschiedliche Konduktanzwerte, vorzugsweise in einem Verhältnis von mindestens 2, insbesondere von 2 bis 7, insbesondere von 5 bis 7, aufweisen, oder das in einem Relaxationsschwingungsmodus arbeitet, in dem das Neuron Impulse ohne externen Erregungsstrom erzeugt, wobei der PMOS- (8) und der NMOS-Transistor (7) der Brücke Konduktanzwerte vorzugsweise in einem Verhältnis gleich 1 aufweisen.

6. Künstliches Neuron (1; 1') nach einem beliebigen der vorhergehenden Ansprüche, wobei die Impulsschaltung durch eine Versorgung mit der negativen Spannung (Vs) zwischen -100 mV und -50 mV und der positiven Spannung (Vd) zwischen +50 mV und +100 mV versorgt wird.

7. Künstliches Neuron (1; 1') nach einem beliebigen der vorhergehenden Ansprüche, wobei die Differenz (Vd-Vs) so festgelegt wird, dass die Spannungsverstärkung jedes CMOS-Inverters größer als oder gleich 2 ist, wobei diese Differenz insbesondere größer als oder gleich 100 mV, vorzugsweise 120 mV, ist und/oder sich die Schwellenspannung von mindestens einem der CMOS-Inverter von 0 V unterscheidet, insbesondere zwischen -50 mV und +50 mV liegt.

8. Künstliches Neuron (1; 1') nach einem beliebigen der vorhergehenden Ansprüche, wobei die Transistoren (7) und (8) der Brücke durch eine FD-SOI-Technologie hergestellt sind, die die Möglichkeit einer Steuerung durch das Substrat verwendet, was die Steuerung des maximalen Stroms der Transistoren (7, 8) durch eine Substratelektrode gestattet.

9. Künstliches Neuron (1; 1') nach einem beliebigen der vorhergehenden Ansprüche, das eine Hilfserregungsschaltung (60) umfasst, die das Membranpotenzial integriert und einen aus dieser Integration resultierenden Strom in die Membrankapazität zurückführt, wobei die Hilfserregungsschaltung (60) als Eingang und Ausgang den Mittelpunkt (9) der Transistoren der Brücke aufweist und Folgendes umfasst: einen Folgeverstärker (U2), der dazu fähig ist, das Membranpotenzial abzugreifen, eine Verzögerungsleitung (T1), die dazu fähig ist, eine Verzögerung in letzteren einzubringen, einen Integrationsverstärker (U1) und eine Transkonduktanz, wobei der Integrationsverstärker (U1) dazu konfiguriert ist, das Membranpotenzial zu integrieren, wobei die sich aus dieser Integration ergebende Spannung mittels der Transkonduktanz in einen Strom umgewandelt wird, der in die Membrankapazität zurückgeführt wird.

10. Künstliches Neuron (1; 1') nach einem beliebigen der vorhergehenden Ansprüche, das ein Phänomen der stochastischen Resonanz durch das Empfangen einer externen Erregung zweier unterschiedlicher Ströme ausnutzt: einem periodischen Strom ($I_{ex}$) mit einer Amplitude, die nicht ausreicht, um Aktionspotenziale zu erzeugen, und einem zufälligen Rauschstrom ($I_b$).

11. Neuronales Netz (20), umfassend eine Synapsenschaltung (4) und mindestens zwei künstliche Neuronen (1, 1') gemäß Definition in einem beliebigen der vorhergehenden Ansprüche, die als Prä-Neuron (1) und Post-Neuron (1') bezeichnet werden und durch die Synapsenschaltung (4) miteinander verbunden sind, wobei die Synapsenschaltung (4) zwei Eingänge aufweist und zwei Transistoren (M16, M13) umfasst, die an ihren Drains in Reihe verbunden sind, wobei mindestens einer der Transistoren vom Typ NMOS (M16) ist, der durch ein Gate-Potenzial (V1), das dem ersten Eingang (weight) der Synapsenschaltung entspricht, gesteuert wird, wobei das Gate des zweiten Transistors dem zweiten Eingang (e2) der Synapsenschaltung entspricht, wobei der Ausgang der Synapsenschaltung, der der Source des NMOS-Transistors (M16) entspricht, mit dem Ausgangspotenzial ($V_{mem1'}$) des Post-Neurons (1') verbunden ist.

12. Künstlicher zentraler Mustergenerator (21), umfassend eine hemmende Synapse (3) und mindestens zwei künstliche Neuronen (1, 1') nach einem beliebigen der Ansprüche 1 bis 10, mit Ausnahme von Anspruch 2 und den davon abhängigen Ansprüchen, die als Prä-Neuron (1) und Post-Neuron (1') bezeichnet werden und durch die hemmende Synapse (3) miteinander verbunden sind, wobei die hemmende Synapse (3) zwei Synapseneingänge aufweist und zwei Transistoren (M16, M13) umfasst, die an ihren Drains in Reihe verbunden sind, wobei mindestens einer der Transistoren vom Typ NMOS (M16) ist, der durch ein Gate-Potenzial (V1), das dem ersten Synapseneingang (weight) entspricht, gesteuert wird, wobei das Gate des zweiten Transistors, das dem zweiten Synapseneingang (e2) entspricht, mit Folgendem verbunden ist:

- mit dem Ausgang der zwei in Reihe geschalteten Invertern (5, 6), wobei der Eingang des ersten (5) dem Membranpotenzial des Prä-Neurons (1) unterliegt, oder
- dem Gate des NMOS-Transistors (7) der Brücke des Prä-Neurons (1); wobei der Ausgang der Synapse (3), der der Source des NMOS-Transistors (M16) entspricht, mit dem Ausgangspotenzial ($V_{mem1'}$) des Post-Neurons (1') verbunden ist.

13. Künstlicher zentraler Mustergenerator (21) nach dem vorhergehenden Anspruch, der Folgendes umfasst:

- ein Prä-Neuron, das in einem Burst-Modus arbeitet, in dem das Prä-Neuron dazu fähig ist, in regelmäßigen Intervallen Impuls-Bursts auszugeben, und ein Post-Neuron, das in einem Relaxationsschwingungsmodus arbeitet, in dem das Post-Neuron dazu fähig ist, Impulse ohne Erregungsstrom zu erzeugen, gekoppelt durch eine hemmende Synapse (3) wie in Anspruch 12 definiert, oder zwei künstliche Neuronen (1, 1'), die beide in einem Relaxationsschwingungsmodus arbeiten, in dem jedes der zwei künstlichen Neuronen dazu fähig ist, Impulse ohne Erregungsstrom zu erzeugen, und miteinander gekoppelt durch zwei hemmende Synapsen (3), jede wie in Anspruch 12 definiert, sodass jedes der zwei künstlichen Neuronen gleichzeitig Prä- und Post-Neuron ist, oder - zwei künstliche Neuronen (1, 1'), die beide in einem Burst-Modus arbeiten, in dem jedes der zwei künstlichen Neuronen dazu fähig ist, in regelmäßigen Intervallen Impuls-Bursts auszugeben, und miteinander gekoppelt durch zwei hemmende Synapsen (3), jede wie in Anspruch 12 definiert, sodass jedes der Neuronen gleichzeitig Prä- und Post-Neuron ist.

14. Verfahren zur Verarbeitung von Informationen, wobei ein neuronales Netz (20) wie in Anspruch 11 definiert verwendet wird, wobei mehrere Aktionspotenziale mit sehr hoher Frequenz am Ausgang des Prä-Neurons (1) auf den Eingang einer Integrationsschaltung (15) angewendet werden, deren Ausgang mit dem ersten Eingang (weight) einer Erregungssynapse (2), die durch die Synapsenschaltung (4) verwirklicht ist, verbunden ist, wobei der zweite Eingang derselben mit dem Prä-Neuron (1) verbunden ist, wobei die Integrationsschaltung (15) insbesondere einen NMOS-Transistors (16) umfasst, dessen Source, die dem Ausgang der Integrationsschaltung (15) entspricht, mit einer Kapazität (17) verbunden ist, wobei das Gate und die Drain des Transistors (16) miteinander verbunden sind und dem Eingang der Integrationsschaltung (15) entsprechen.

15. Informationsverarbeitungsverfahren nach dem vorhergehenden Anspruch, wobei ein thermisches Eigenrauschen des Prä-Neurons (1) in den Eingang desselben zurückgeführt wird.

**Claims**

1. Artificial neuron (1; 1') comprising:

   - a capacitance, called membrane capacitance (Cm),
   - an input, called external synaptic excitation current ($I_{ex}$), the membrane capacitance (Cm) integrating this input current,

   - a negative feedback pulse circuit supplied by a power supply (Vs, Vd) at negative voltage (Vs) lying between -200 mV and 0 mV and at positive voltage (Vd) lying between 0 mV and + 200 mV, consisting of:

      o a bridge based on PMOS (8) and NMOS (7) transistors in series and connected, at the drains thereof, by a midpoint (9) to the membrane capacitance (Cm), this midpoint (9) defining the output of the artificial neuron (1; 1'),
      o at least one capacitance, called delay capacitance (Cna, Ck), between the gate and the source of one of the transistors (7, 8) of the bridge,

   - only two CMOS inverters (5, 6) connected in a cascade-like manner, each being composed of two transistors, the input of the first inverter (5) being connected to the membrane capacitance (Cm) and the output of said inverter being connected to the input of the second inverter (6) and to the gate of one of the transistors (7; 8) of the bridge, the output of the second inverter (6) being connected to the gate of the other transistor (7; 8) of the bridge, the artificial neuron comprising only six transistors.

2. Artificial neuron (1; 1') comprising:

   - a capacitance, called membrane capacitance (Cm),
   - an input, called external synaptic excitation current ($I_{ex}$), the membrane capacitance (Cm) integrating this input current,
   - a negative feedback pulse circuit supplied by a power supply (Vs, Vd) at negative voltage (Vs) lying between -200 mV and 0 mV and at positive voltage (Vd) lying between 0 mV and + 200 mV, consisting of:

      o a bridge based on PMOS (8) and NMOS (7) transistors in series and connected, at the drains thereof, by a midpoint (9) to the membrane capacitance (Cm), this midpoint (9) defining the output of the artificial neuron (1; 1'),
      o at least one capacitance, called delay capacitance (Cna, Ck), between the gate and the source of one of the transistors (7, 8) of the bridge,

   - only three CMOS inverters (10, 11, 12), with two of said inverters (11, 12) being connected in a cascade-like manner, each being composed of two transistors, the input of the first inverter (11) being connected to the membrane capacitance (Cm) and the output of said inverter being connected to the input of the second inverter (12), the output of the second inverter (12) being connected to the gate of one of the transistors (7; 8) of said bridge, the input of the third CMOS inverter (10) being connected to the membrane capacitance (Cm) and the output of the third CMOS inverter (10) being connected to the gate of the other transistor (7; 8) of said bridge.

3. Artificial neuron (1; 1') according to Claim 1 or 2, the charging of the membrane capacitance (Cm) being provided by the PMOS transistor (8) of the bridge and the discharging thereof being provided by the NMOS transistor (7).

4. Artificial neuron (1; 1') according to any one of the preceding claims, comprising two delay capacitances, the delay capacitance (Cna) connected to the PMOS transistor (8) being less than the delay capacitance (Ck) connected to the NMOS transistor (7), with the optimum being zero, the delay capacitance (Ck) connected to the NMOS transistor (7) in particular being greater than the membrane capacitance (Cm).

5. Artificial neuron (1; 1') according to any one of the preceding claims, operating in stable mode, the PMOS (8) and NMOS (7) transistors of said bridge having different conductance values, preferably at a ratio of at least 2, particularly from 2 to 7, in particular from 5 to 7, or operating in relaxation oscillator mode, in which the neuron generates pulses without an external excitation current, the PMOS (8) and NMOS (7) transistors of said bridge having conductance values, preferably at a ratio that is equal to 1.

6. Artificial neuron (1; 1') according to any one of the preceding claims, the pulse circuit being supplied by a power supply with the negative voltage (Vs) lying between -100 mV and -50 mV and the positive voltage (Vd) lying between +50 and +100 mV.

7. Artificial neuron (1; 1') according to any one of the preceding claims, the difference (Vd-Vs) being established so that the voltage gain of each CMOS inverter is greater than or equal to 2, with this difference particularly being greater than or equal to 100 mV, optimally equal to 120 mV, and/or the threshold voltage of at least one of the CMOS inverters being different from 0 V, particularly lying between -50 mV and +50 mV.

8. Artificial neuron (1; 1') according to any one of the preceding claims, the transistors (7) and (8) of said bridge being produced using FD-SOI technology using the possibility of control by the substrate, allowing the maximum current of the transistors (7, 8) to be controlled by a substrate electrode.

9. Artificial neuron (1; 1') according to any one of the preceding claims, comprising an additional excitation circuit (60) integrating the membrane potential and reinjecting a current resulting from this integration into the membrane capacitance, which additional excitation circuit (60) has the midpoint (9) of the transistors of the bridge as input and output and comprises a follower amplifier (U2) able to tap off the membrane potential, a delay line (T1) able to introduce a delay therein, an integrating amplifier (U1) and a transconductance, the integrating amplifier (U1) being configured to integrate the membrane potential, the voltage resulting from this integration being converted, by way of the transconductance, into current that is reinjected into the membrane capacitance.

10. Artificial neuron (1; 1') according to any one of the preceding claims, using a stochastic resonance phenomenon through the reception of an external excitation of two different currents: a periodic current ($I_{ex}$) with insufficient amplitude for generating spikes and a random noise current ($I_b$).

11. Neural network (20) comprising a synaptic circuit (4) and at least two artificial neurons (1, 1') as defined in any one of the preceding claims, called pre-neuron (1) and post-neuron (1'), connected together by the synaptic circuit (4), the synaptic circuit (4) having two inputs and comprising two transistors (M16, M13) connected in series by the drains thereof, at least one of said transistors being of the NMOS type (M16) controlled by a gate potential (V1) corresponding to the first input (weight) of the synaptic circuit, the gate of the second transistor corresponding to the second input (e2) of the synaptic circuit, the output of the synaptic circuit corresponding to the source of the NMOS transistor (M16) being connected to the output potential ($V_{mem1'}$) of the post-neuron (1').

12. Artificial spinal locomotor network (21), comprising an inhibitory synapse (3) and at least two artificial neurons (1, 1') according to any one of Claims 1 to 10 apart from Claim 2 and those dependent thereon, called pre-neuron (1) and post-neuron (1'), connected together by the inhibitory synapse (3), the inhibitory synapse (3) having two synaptic inputs and comprising two transistors (M16, M13) connected in series by the drains thereof, at least one of said transistors being of the NMOS type (M16) controlled by a gate potential (V1) corresponding to the first synaptic input (weight), the gate of the second transistor corresponding to the second synaptic input (e2) being connected:

    - to the output of the two inverters in series (5, 6), with the input of the first inverter (5) being subject to the membrane potential of the pre-neuron (1), or

- the gate of the NMOS transistor (7) of the bridge of the pre-neuron (1); the output of the synapse (3) corresponding to the source of the NMOS transistor (M16) being connected to the output potential ($V_{mem1'}$) of the post-neuron (1').

13. Artificial spinal locomotor network (21) according to the preceding claim, comprising:

- a pre-neuron operating in burst mode, in which the pre-neuron is able to emit bursts of pulses at regular intervals, and a post-neuron operating in relaxation oscillator mode, in which the post-neuron is able to generate pulses without an excitation current, coupled by an inhibitory synapse (3) as defined in Claim 12, or two artificial neurons (1, 1') both operating in relaxation oscillator mode, in which each of the two artificial neurons is able to generate pulses without an excitation current, and mutually coupled by two inhibitory synapses (3) each as defined in Claim 12, so that each of the two artificial neurons is both a pre-neuron and post-neuron, or
- two artificial neurons (1, 1') both operating in burst mode, in which each of the two artificial neurons is able to emit bursts of pulses at regular intervals, and mutually coupled by two inhibitory synapses (3) each as defined in Claim 12, so that each of the neurons is both a pre-neuron and post-neuron.

14. Information processing method, wherein a neural network (20) as defined in Claim 11 is used, wherein multiple very high frequency spikes at the output of the pre-neuron (1) are applied to the input of an integrating circuit (15), the output of which is connected to the first input (weight) of an excitatory synapse (2) formed by the synaptic circuit (4), the second input thereof being connected to the pre-neuron (1), in particular the integrating circuit (15) comprises an NMOS transistor (16), the source of which, corresponding to the output of the integrating circuit (15), is connected to a capacitor (17), the gate and the drain of said transistor (16) being connected together and corresponding to the input of the integrating circuit (15).

15. Information processing method according to the preceding claim, wherein an intrinsic thermal noise of the pre-neuron (1) is injected at the input thereof.

Fig. 1

Fig. 2

Fig. 3

Fig. 4a

Fig. 4b

Fig. 4c

Fig. 5

Fig. 6

Fig. 7

Fig. 8a

Fig. 8b

Fig. 8c

Fig. 8d

Fig. 8e

Fig. 8f

Fig. 8g

Fig. 9

Fig. 10

Fig. 11a

Fig. 11b

Fig. 11c

Fig. 11d

20

Vd

50 51

1

Vs

# Fig. 12

20

Vd$_4$

Vd$_1$ Vd$_{1'}$

1 Cm 4 Cm 1'

Vs$_1$ Vs$_4$ Vs$_{1'}$

# Fig. 13

Fig. 14

EP 3 443 506 B1

Fig. 16

EP 3 443 506 B1

Fig. 15

Fig. 17

Fig. 18

Fig. 19

Fig. 20

Fig. 21

Fig. 22a

Fig. 22b

Fig. 22c

Fig. 22d

Fig. 23

Fig. 24

EP 3 443 506 B1

Fig. 25

Fig. 26a

Fig. 26b

## RÉFÉRENCES CITÉES DANS LA DESCRIPTION

**Documents brevets cités dans la description**

- US 6242988 B1
- EP 2819068 A2

**Littérature non-brevet citée dans la description**

- **N.QIAO et al.** *Frontiers in Neuroscience,* 2015, vol. 9
- *Biophysics Journal,* 1981, vol. 35
- **R. BEHDAD et al.** *IEEE transactions on neural networks and learning systems,* 2015, vol. 26
- **INDIVERI et al.** Neuromorphic electronic circuits as key enablers of autonomous cognitive agents ; atelier. *Neuro-Inspired Computational Elements (NICE),* 2016, http://neuroscience.berkeley.edu/wp-content/uploads/2016/05/Giacomo_Indiveri_nice16_sm.pdf
- **CHICCA et al.** *Neuromorphic electronic circuits for building autonomous cognitive systems,* 2014
- **ZHAO et al.** Spike-time-dependent encoding for neuromorphic processors. *Journal on Emerging Technologies in Computing Systems,* 2015
- **VAN SCHAIK.** Building blocks for electronic spiking neural networks. *Neural Networks,* 2001
- **Y. WEI et al.** *The Journal of Neuroscience,* 27 Août 2014